# EUROPEAN PATENT APPLICATION

(11) **EP 4 383 885 A1**
(43) Date of publication of application: **12.06.2024**
(21) Application number: 21952780.1
(22) Date of filing: 04.08.2021
(51) Int. Cl.: H04W 72/04, H04W 72/12, H04W 28/04

(54) **TERMINAL AND WIRELESS COMMUNICATION METHOD**

(71) Applicant: NTT DOCOMO, INC., Tokyo 100-6150 (JP)
(72) Inventor: TAKAHASHI, Yuki, Tokyo 100-6150 (JP); KUMAGAI, Shinya, Tokyo 100-6150 (JP); NAGATA, Satoshi, Tokyo 100-6150 (JP); WANG, Jing, Beijing 100190 (CN); CHEN, Lan, Beijing 100190 (CN); PI, Qiping, Beijing 100190 (CN)
(74) Representative: Hoffmann Eitle
(86) International application number: PCT/JP2021/029034
(87) International publication number: WO 2023/012955

(57) **Abstract**

A terminal includes: a transmission section that transmits, by using a cell different from a cell in which a signal based on semi-persistent scheduling has been received, a response signal for the signal; and a control section that interprets, based on a subcarrier spacing of the cell in which the response signal is transmitted, a parameter for determining a transmission slot for the response signal and determines a slot for transmitting the response signal.

## Description

### Technical Field

The present disclosure relates to a terminal and a radio communication method.

### Background Art

Long Term Evolution (LTE) has been specified for achieving a higher data rate, lower latency, and the like in a Universal Mobile Telecommunication System (UMTS) network. Future systems of LTE have also been studied for achieving a broader bandwidth and a higher speed based on LTE. Examples of the future systems of LTE include systems called LTE-Advanced (LTE-A), Future Radio Access (FRA), 5th generation mobile communication system (5G), 5G plus (5G+), Radio Access Technology (New-RAT), New Radio (NR), and the like.

In NR, for example, enhancement of a feedback function from a terminal to a base station has been discussed in order to improve the communication quality (e.g., see Non-Patent Literature (hereinafter, referred to as "NPL") 1).

Information to be fed back from the terminal to the base station is transmitted in a resource of a Physical Uplink Control Channel (PUCCH). Supporting PUCCH carrier switching has been agreed with respect to the extension of an Ultra-Reliable and Low Latency Communications (URLLC) technology in Release 17 of 3GPP.

### Citation List

### Non-Patent Literature

NPL 1
"Enhanced Industrial Internet of Things (IoT) and ultra-reliable and low latency communication," RP-201310, 3GPP TSG RAN Meeting #86e, 3GPP, July, 2020

### Summary of Invention

### Technical Problem

There is scope for study on a transmission timing of a response signal to a received signal based on semi-persistent (static) scheduling when carrier switching of an uplink signal is performed.

An aspect of the present disclosure is to provide a terminal and a radio communication method each capable of appropriately controlling, when carrier switching of an uplink signal is performed, a transmission timing of a response signal to a received signal based on semi-persistent scheduling.

A terminal according to an aspect of the present disclosure includes: a transmission section that transmits, by using a cell different from a cell in which a signal based on semi-persistent scheduling has been received, a response signal for the signal; and a control section that interprets, based on a subcarrier spacing of the cell in which the response signal is transmitted, a parameter for determining a transmission slot for the response signal and determines a slot for transmitting the response signal.

A communication method according to an aspect of the present disclosure includes: transmitting, by using a cell different from a cell in which a signal based on semi-persistent scheduling has been received, a response signal for the signal; and interpreting, based on a subcarrier spacing of the cell in which the response signal is transmitted, a parameter for determining a transmission slot for the response signal, and determining a slot for transmitting the response signal.

### Brief Description of Drawings

FIG. 1 illustrates an example of dual connectivity;
FIG. 2 illustrates an example of PUCCH carrier switching;
FIG. 3 is a diagram for describing an example of dynamic carrier switching;
FIG. 4 is a diagram for describing another example of dynamic carrier switching;
FIG. 5 is a diagram for describing still another example of dynamic carrier switching;
FIG. 6 is a diagram for describing yet another example of dynamic carrier switching;
FIG. 7 is a diagram for describing an example of Opt. 1 of Proposal 3;
FIG. 8 is a diagram for describing an example of Opt. 2 of Proposal 3;
FIG. 9 is a flowchart indicating an example of overlapping resolution;
FIG. 10 is a flowchart indicating another example of overlapping resolution;
FIG. 11 is a flowchart indicating still another example of overlapping resolution;
FIG. 12 is a flowchart indicating yet another example of overlapping resolution;
FIG. 13 is a diagram for describing an example of Opt. 1 of Proposal 4;
FIG. 14 indicates a loop example in Opt. 2A of Proposal 4;
FIG. 15 illustrates an exemplary operation of the loop example in Opt. 2A of Proposal 4;
FIG. 16 illustrates another exemplary operation of the loop example in Opt. 2A of Proposal 4;
FIG. 17 is a diagram for describing an exemplary operation in Opt. 2B of Proposal 4;
FIG. 18 is a block diagram illustrating an exemplary configuration of base station 10 according to an embodiment;
FIG. 19 is a block diagram illustrating an exemplary configuration of terminal 20 according to the present embodiment; and
FIG. 20 illustrates an exemplary hardware configuration of the base station and the terminal according to the present embodiment.

### Description of Embodiments

Hereinafter, an embodiment according to an aspect of the present disclosure will be described in detail with reference to the accompanying drawings. 3GPP has been discussing technologies for schemes called URLLC and Industrial Internet of Things (IIoT) in Rel. 17.

In URLLC, enhancement of a feedback function of a terminal for a Hybrid Automatic Repeat request-Acknowledgement (HARQ-ACK) has been studied. The HARQ-ACK is an example of information on a confirmation response (e.g., acknowledgement) to data received by the terminal. With respect to these study matters for URLLC, supporting dynamic and semi-static PUCCH carrier switching has been agreed. Note that, the PUCCH carrier switching may be called by other names such as control-information -transmitting carrier switching.

The PUCCH carrier switching is a technology to be applied to a case where a base station performs communication through a plurality of cells. Hereinafter, dual connectivity, which is an example of the communication through a plurality of cells, and the PUCCH carrier switching will be described.

### <Dual Connectivity>

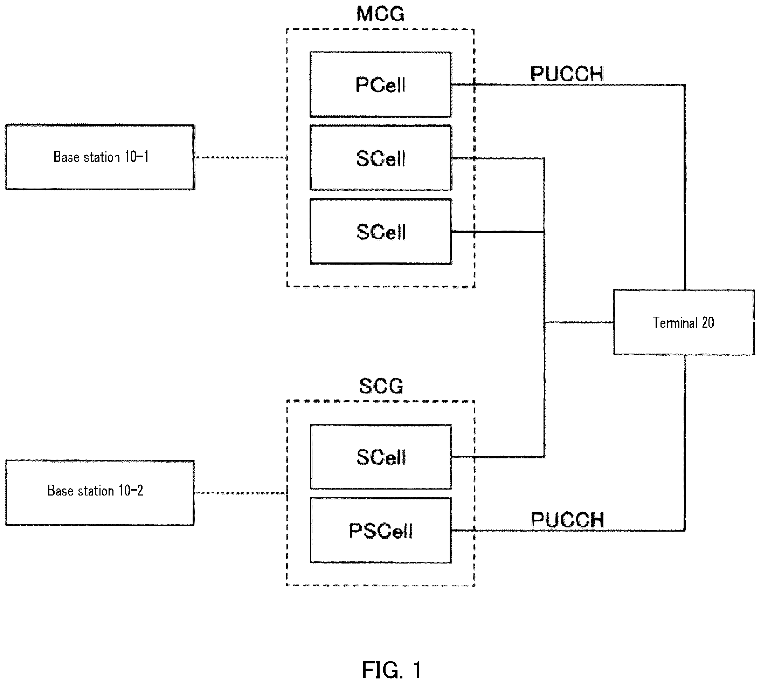

FIG. 1 illustrates an example of dual connectivity (DC). In the example of FIG. 1, base station 10-1 may be a Master Node (MN), and base station 10-2 may be a Secondary Node (SN). As illustrated in the example of FIG. 1, carriers between different base stations are aggregated in the DC.

In the example of FIG. 1, base station 10-1 communicates with terminal 20 through a primary cell (Pcell) and secondary cells (Scells). In the example of FIG. 1, terminal 20 has established an RRC connection with base station 10-1.

In the case of DC, a latency in communication between base stations 10-1 and 10-2 may be present, so that it is difficult to indicate, to base station 10-2, uplink control information (e.g., UCI) received in the Pcell of base station 10-1 via a backhaul link (e.g., a wired or wireless link connecting between base stations 10-1 and 10-2) to reflect the uplink control information in scheduling of an Scell under base station 10-2. Accordingly, in the DC, in addition to the Pcell of base station 10-1, one carrier under base station 10-2 may be configured as a Primary Scell (PScell), and PUCCH transmission may be supported by the PScell. In this case, terminal 20 transmits the UCI to base station 10-2 through the PScell.

In the example of FIG. 1, terminal 20 configures, in addition to the Pcell, the Scells for base station 10-1. Further, terminal 20 configures, in addition to the PScell, the Scell for base station 10-2. Terminal 20 transmits the UCI of each carrier under base station 10-1 via PUCCH of the Pcell. Further, terminal 20 transmits the UCI of each carrier under base station 10-2 via PUCCH of the PScell. In the example of FIG. 1, a cell group (CG) under base station 10-1 may be referred to as a Master Cell-Group (MCG), and a cell group under base station 10-2 may be referred to as a Secondary Cell-Group (SCG).

In a case where the DC is performed, terminal 20 may transmit PUCCH through a Pcell, a PScell, and/or a PUCCH-Scell. Generally, it is not assumed that terminal 20 transmits PUCCH through an Scell other than the Pcell, the PScell, and the PUCCH-Scell.

### <PUCCH carrier switching>

The PUCCH carrier switching has been studied as a method of reducing latency in HARQ-ACK feedback in a Time Division Duplex (TDD) scheme.

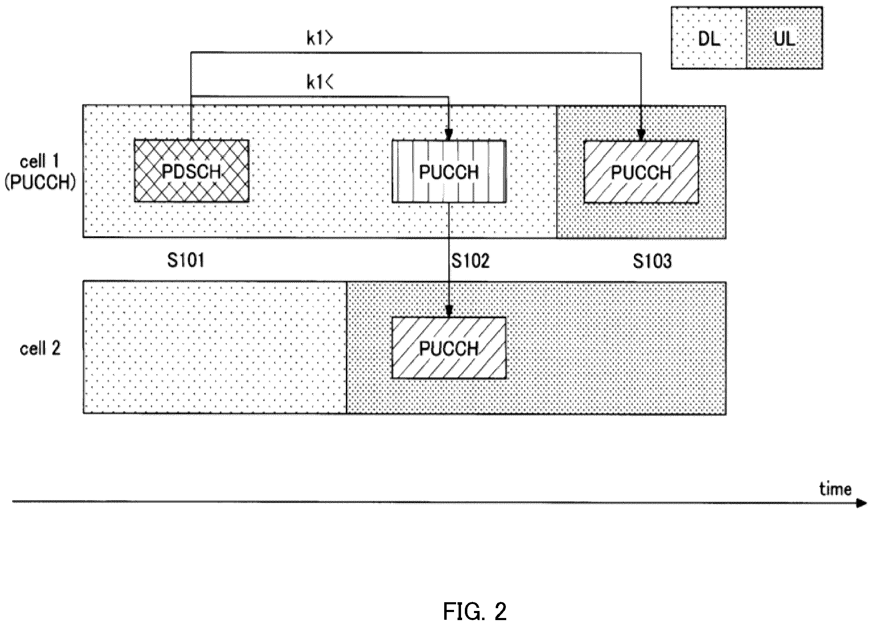

FIG. 2 illustrates an example of the PUCCH carrier switching. In the example of FIG. 2, a base station and a terminal communicate with each other through cells 1 and 2. In the example of FIG. 2, cell 1 is a Pcell whereas cell 2 is an Scell. Further, the example of FIG. 2 illustrates downlink (DL) slots and uplink (UL) slots in the cells.

In the example of FIG. 2, the terminal receives data (receives Physical Downlink shared Channel (PDSCH)) at the timing of S101. The terminal attempts to transmit HARQ-ACK for the data received in S101 at the timing of S102, but the slot of cell 1 at the timing of S102 is the downlink (DL) slot. For this reason, in a case where the terminal transmits HARQ-ACK in cell 1, transmission of the HARQ-ACK is held until a transmission timing of PUCCH in the uplink (UL) slot (e.g., timing of S103 of FIG. 2), so that latency in the HARQ-ACK transmission increases. Note that, the PUCCH transmission timing in the uplink (UL) slot may be referred to as a PUCCH transmission occasion.

In the example of FIG. 2, the slot of cell 2 at the timing of S102 is the UL slot. In the example of FIG. 2, the latency in the HARQ-ACK transmission can be reduced when the terminal can transmit the HARQ-ACK for the data received in S 101 on the PUCCH transmission occasion at the timing of S102 in cell 2. In URLLC, low latency in a radio section is especially required. Accordingly, in 3GPP, the PUCCH carrier switching in which the terminal switches between carriers for performing PUCCH transmission has been studied as an extension of the URLLC technology.

Note that, in the following embodiment, "the same timing" may be completely the same timing or may represent that all or some of time resources (e.g., one or a plurality of symbols (which may also be resource(s) in time units shorter than symbols)) are the same or overlap.

The PUCCH carrier switching may represent that in a case where the terminal attempts to perform PUCCH transmission at a specific transmission timing of a Pcell (which may be PScell or PUCCH-Scell), the terminal switches a cell in which the PUCCH transmission is performed from the Pcell (which may be PScell or PUCCH-Scell) to an Scell (which is Scell other than PScell in the case of PScell and is Scell other than PUCCH-Scell in the case of PUCCH-Scell) of one or a plurality of Scells in which a slot at the same timing as the specific transmission timing is a UL slot, since the slot at the specific transmission timing of the Pcell (which may be PScell or PUCCH-Scell) is a DL slot. Note that, in an embodiment of the present invention, the unit of the specific transmission timing is not limited to the slot. For example, the specific transmission timing may be a timing in units of subframes or may be a timing in units of symbols.

Two methods have been studied for achieving the PUCCH carrier switching. The first method is a method in which a base station dynamically indicates, to a terminal, a carrier for performing PUCCH transmission. The second method is a method in which a base station semi-statically configures, for a terminal, a carrier for performing the PUCCH transmission. Note that, in the embodiment described below, "PUCCH transmission" and "transmitting PUCCH" may refer to transmission of uplink control information via PUCCH.

The terminal may indicate, to the base station, terminal capability information (UE capability) that specifies information on capability of the terminal for the PUCCH transmission.

For example, information indicating whether the terminal supports switching between configurations related to transmission of control information may be specified as the UE capability information of the terminal. The switching between configurations related to transmission of control information may be, for example, switching between resources (e.g., carriers or cells) used for transmitting the control information. The switching between resources used for transmitting the control information may also be referred to as "PUCCH carrier switching." Further, as the UE capability information of the terminal, information indicating application of dynamic PUCCH carrier switching and/or semi-static PUCCH carrier switching may be specified.

A configuration operation of the semi-static PUCCH carrier switching may be based on RRC configured with a PUCCH cell timing pattern of a PUCCH cell to which the semi-static PUCCH carrier switching is applied. The configuration operation of the semi-static PUCCH carrier switching may also be supported between cells having different numerology.

In the PUCCH carrier switching, a PUCCH resource may be configured per Uplink Bandwidth Part (UL BWP) (e.g., per candidate cell and per UL BWP of candidate cell).

Here, it has been agreed that in 3GPP, for PUCCH carrier switching based on a dynamic indication of the control information, a K1 value (offset) from PDSCH to HARQ-ACK may be interpreted based on numerology of a target PUCCH cell to be dynamically indicated. Incidentally, the control information may be control information for scheduling PUCCH, such as Downlink control information (DCI). Further, the numerology may be regarded as a slot or a Subcarrier Spacing (SCS).

However, when the dynamic PUCCH carrier switching (hereinafter sometimes referred to as dynamic carrier switching) is enabled (applied), there is scope for study on interpretation of a K1 value in Semi-Persistent Scheduling (SPS) HARQ-ACK. In the present embodiment, when the dynamic carrier switching is enabled, a transmission timing of the SPS HARQ-ACK based on the K1 value is appropriately determined.

Moreover, there is scope for study on processing in a case where slots for dynamic HARQ-ACKs (e.g., HARQ-ACKs whose transmission timings are dynamically determined (scheduled) by DCI) (hereinafter may also be referred to as "dynamic HARQ-ACK slot") overlap with each other on different cells. In the present embodiment, when the dynamic HARQ-ACK slots overlap with each other, the dynamic HARQ-ACKs are appropriately multiplexed.

Further, there is scope for study on processing in a case where a dynamic HARQ-ACK slot and an SPS HARQ-ACK slot overlap with each other on different cells. In the present embodiment, when the dynamic HARQ-ACK slot and the SPS HARQ-ACK slot overlap with each other, the dynamic HARQ-ACK and the SPS HARQ-ACK are appropriately multiplexed.

### <Proposal 1: Target Cell Determination for SPS HARQ-ACK>

When the dynamic carrier switching is enabled, a K1 value of HARQ-ACK in SPS PDSCH may be interpreted based on numerology of a target cell.

Incidentally, for example, a transmission period of SPS PDSCH is configured by RRC. In additon, a transmission timing of HARQ-ACK for SPS PDSCH (K1 value) is configured by RRC, for example. The HARQ-ACK for SPS PDSCH may be regarded as SPS HARQ-ACK.

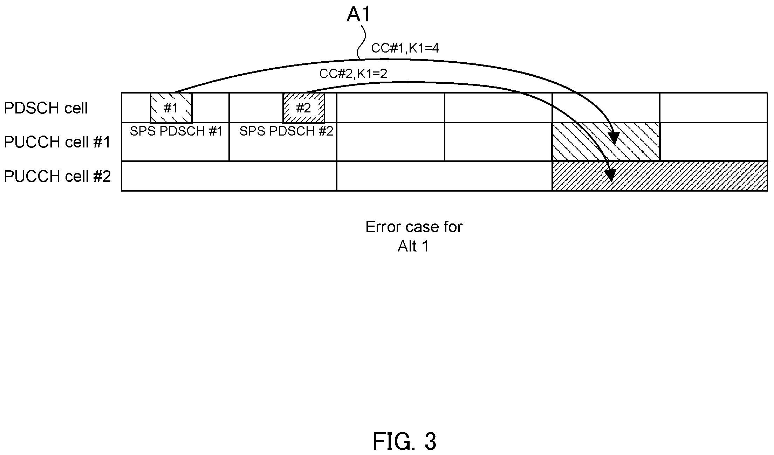

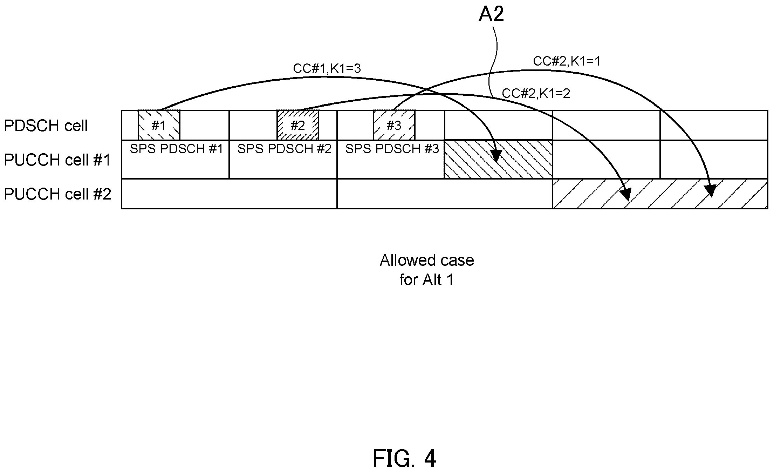

FIGS. 3 and 4 are diagrams for describing examples of the dynamic carrier switching. In FIGS. 3 and 4, numerology of PUCCH cell #1 and numerology of PUCCH cell #2 are different from each other.

For example, in FIG. 3, a K1 value of SPS PDSCH #1 is four. HARQ-ACK for SPS PDSCH #1 is transmitted in PUCCH cell #1 (Component Carrier (CC) #1).

Since the HARQ-ACK for SPS PDSCH #1 is transmitted in PUCCH cell #1, the K1 value (four) of SPS PDSCH #1 is interpreted based on the numerology (slot) of PUCCH cell #1. Thus, the HARQ-ACK for SPS PDSCH #1 is transmitted in a slot at the arrowhead of arrow A1 illustrated in FIG. 3.

Meanwhile, for example, in FIG. 4, a K1 value of SPS PDSCH #2 is two. HARQ-ACK for SPS PDSCH #2 is transmitted in PUCCH cell #2 (CC #2).

Since the HARQ-ACK for SPS PDSCH #2 is transmitted in PUCCH cell #2, the K1 value (two) of SPS PDSCH #2 is interpreted based on the numerology (slot) of PUCCH cell #2. Thus, the HARQ-ACK for SPS PDSCH #2 is transmitted in a slot at the arrowhead of arrow A2 illustrated in FIG. 4.

A target cell for transmitting the SPS HARQ-ACK may be determined based on the following Opt. 1 or Opt. 2.

### <Opt. 1>

The target cell for the HARQ-ACK for SPS PDSCH may be indicated in a DCI for SPS configuration (activation DCI). In other words, a terminal may determine, as the target cell for the HARQ-ACK for SPS PDSCH, a cell indicated based on the DCI for SPS configuration.

### <Opt. 2>

The target cell for the HARQ-ACK for SPS PDSCH may be a fixed cell. In other words, the terminal may transmit the HARQ-ACK for SPS PDSCH in the fixed cell. The fixed cell may be defined by specifications. The fixed cell may be, for example, a Pcell, a PSCell, or a PUCCH-Cell.

### <Opt. 3>

The target cell for the HARQ-ACK for SPS PDSCH may be configured based on RRC. As for SPS, a plurality of configurations can be made (e.g., see SPS PDSCHs #1 to #3 in FIG. 4). The target cell for the HARQ-ACK for SPS PDSCH may be configured based on RRC for each configured SPS. Alternatively, the target cell for the HARQ-ACK for SPS PDSCH may be configured based on RRC commonly in all or some SPSs.

In Opt. 1 to Opt. 3, when different SPS HARQ-ACKs are configured for different target cells, the following Alt. 1 or Alt. 2 may be taken into account.

### <Alt. 1>

The terminal does not assume overlapping of SPS HARQ-ACK slots on different cells.

For example, the terminal does not assume that the SPS HARQ-ACK slots overlap with each other as illustrated in FIG. 3. That is, in Alt. 1, the terminal assumes no overlapping of the SPS HARQ-ACK slots as illustrated in FIG. 4.

For Alt. 1, control by the base station may avoid the overlapping of SPS HARQ-ACK slots on different cells, for example. In this case, a processing load on the terminal can be reduced and a configuration of the terminal can be thus simplified since the control by the base station avoids the overlapping of SPS HARQ-ACK slots on different cells.

### <Alt. 2>

The terminal may assume the overlapping of SPS HARQ-ACK slots on different cells.

For example, the terminal may assume that the SPS HARQ-ACK slots overlap with each other on the different cells as illustrated in FIG. 3. When the SPS HARQ-ACK slots overlap with each other, the terminal may take into account Proposal 3 and/or Proposal 4 described later.

For Alt. 2, SPS HARQ-ACK slots may or may not overlap with each other on different cells. Thus, in Alt. 2, there is flexibility in determining a slot for transmitting the SPS HARQ-ACK.

In the above description, it is assumed that a K1 value of SPS PDSCH is interpreted in the numerology of the target cell, but the value may be interpreted in numerology of a source cell (cell in which SPS PDSCH has been received). For example, in FIGS. 3 and 4, a K1 value may be interpreted in numerology of a PDSCH cell.

Further, when the semi-static carrier switching is enabled, a K1 value of HARQ-ACK for SPS PDSCH may be interpreted based on the numerology of a target cell. Meanwhile, when the dynamic carrier switching and/or the semi-static carrier switching is enabled, a K1 value of HARQ-ACK for SPS PDSCH may be interpreted based on the numerology of the target cell.

### <Proposal 2: Overlapping of Slots for Dynamic HARQ-ACK on Different Carriers>

### <Opt. 1>

The terminal does not assume overlapping of dynamic HARQ-ACK slots on different carriers (cells).

For Opt. 1, control by the base station, such as gNB, may avoid the overlapping of dynamic HARQ-ACK slots on different carriers. In this case, a processing load on the terminal can be reduced and a configuration of the terminal can be thus simplified since the control by the base station avoids the overlapping of dynamic HARQ-ACK slots on different carriers.

### <Opt. 2>

The terminal may assume the overlapping of dynamic HARQ-ACK slots on different carriers.

When the dynamic HARQ-ACK slots overlap with each other, the terminal may take into account Proposal 3 and/or Proposal 4 described later.

For Opt. 2, dynamic HARQ-ACK slots may or may not overlap with each other on different cells. Thus, in Opt. 2, there is flexibility in determining a slot for transmitting the dynamic HARQ-ACK.

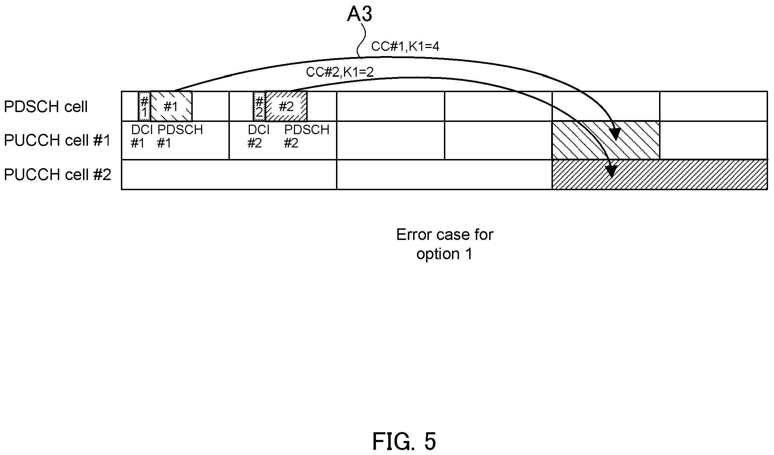

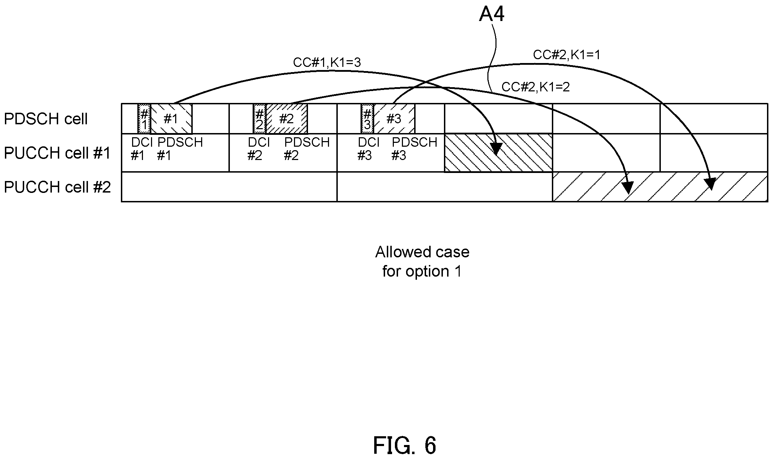

FIGS. 5 and 6 are diagrams for describing other examples of the dynamic carrier switching. In FIGS. 5 and 6, numerology of PUCCH cell #1 and numerology of PUCCH cell #2 are different from each other.

For example, in FIG. 5, a K1 value of PDSCH #1 in DCI #1 is four. HARQ-ACK (dynamic HARQ-ACK) for PDSCH #1 is transmitted in PUCCH cell #1 (CC #1).

Since the HARQ-ACK for PDSCH #1 is transmitted in PUCCH cell #1, the K1 value (four) of PDSCH #1 is interpreted based on the numerology of PUCCH cell #1. Thus, the HARQ-ACK for PDSCH #1 is transmitted in a slot at the arrowhead of arrow A3 illustrated in FIG. 5.

Meanwhile, for example, in FIG. 6, a K1 value of PDSCH #2 in DCI #2 is two. HARQ-ACK for PDSCH #2 is transmitted in PUCCH cell #2 (CC #2).

Since the HARQ-ACK for PDSCH #2 is transmitted in PUCCH cell #2, the K1 value (two) of PDSCH #2 is interpreted in the numerology of PUCCH cell #2. Thus, the HARQ-ACK for PDSCH #2 is transmitted in a slot at the arrowhead of arrow A4 illustrated in FIG. 6.

Incidentally, in Opt. 1 of Proposal 2, the terminal does not assume the overlapping of dynamic HARQ-ACK slots on different carriers (cells). Therefore, in Opt. 1 of Proposal 2, the case of FIG. 5 is not assumed.

### <Proposal 3: Multiplexing of Dynamic and/or SPS HARQ-ACK(s)>

The following Case 1 to Case 4 may be assumed for the overlapping of dynamic HARQ-ACK(s) and/or SPS HARQ-ACK(s). That is, in the overlapping in Alt. 2 of Proposal 1 and in the overlapping in Opt. 2 of Proposal 2, the terminal may assume overlapping in the following Case 1 to Case 4.

### <Case 1>

The overlapping of dynamic HARQ-ACK slots on different carriers is not assumed, and the overlapping of SPS HARQ-ACK slots on different carriers is not assumed.

### <Case 2>

The overlapping of dynamic HARQ-ACK slots on different carriers is assumed, whereas the overlapping of SPS HARQ-ACK slots on different carriers is not assumed.

### <Case 3>

The overlapping of dynamic HARQ-ACK slots on different carriers is not assumed, whereas the overlapping of SPS HARQ-ACK slots on different carriers is assumed.

### <Case 4>

The overlapping of dynamic HARQ-ACK slots on different carriers is assumed, and the overlapping of SPS HARQ-ACK slots on different carriers is assumed.

Note that Case 1 makes it possible to reduce the processing load on the terminal and simplify the configuration of the terminal, as compared with Case 2 to Case 4.

### <Details of Case 1>

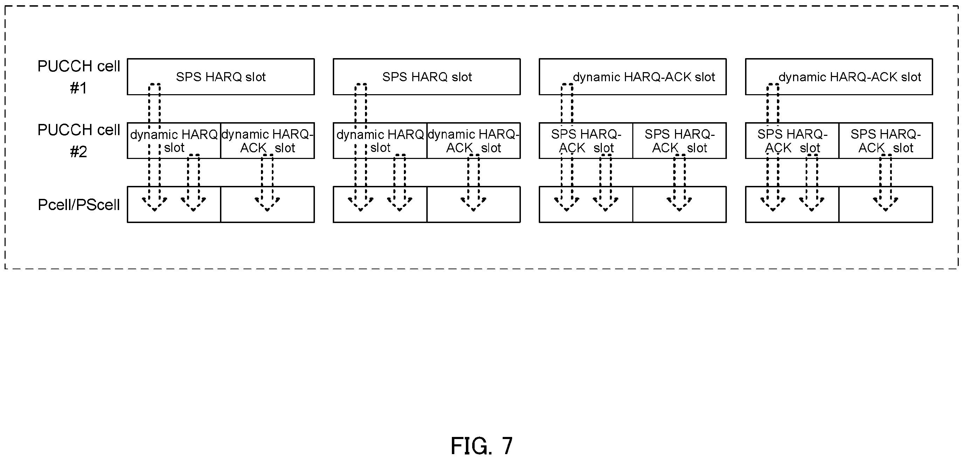

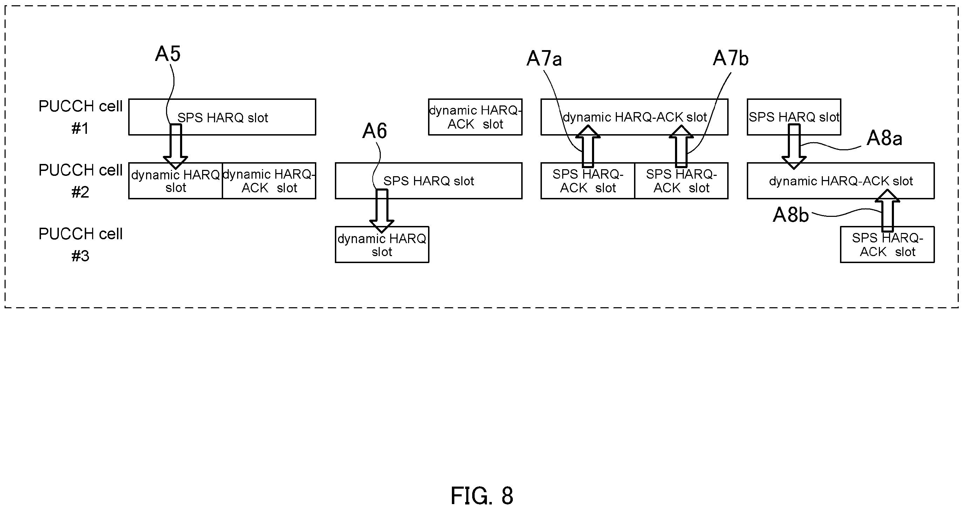

As noted above, in Case 1, the overlapping of dynamic HARQ-ACK slots on different carriers is not assumed, and the overlapping of SPS HARQ-ACK slots on different carriers is not assumed. In other words, in Case 1, neither the overlapping between dynamic HARQ-ACK slots is not assumed nor the overlapping between SPS HARQ-ACK slots is not assumed (see, e.g., FIGS. 7 and 8).

Thus, in Case 1, the terminal may multiplex and transmit dynamic HARQ-ACK and SPS HARQ-ACK, assuming overlapping between a dynamic HARQ-ACK slot and an SPS HARQ-ACK slot.

For example, when a dynamic HARQ-ACK slot and an SPS HARQ-ACK slot overlap with each other on the same carrier, the terminal may multiplex and transmit dynamic HARQ-ACK and SPS HARQ-ACK. Specifically, when the dynamic HARQ-ACK slot and the SPS HARQ-ACK slot overlap with each other in the same slot of a certain carrier, the terminal may multiplex and transmit the dynamic HARQ-ACK and the SPS HARQ-ACK in the same slot of the certain carrier.

On the other hand, when a dynamic HARQ-ACK slot and an SPS HARQ-ACK slot overlap with each other on different carriers, the terminal may multiplex and transmit dynamic HARQ-ACK and SPS HARQ-ACK based on the following Opt. 1 or Opt. 2.

### <Opt. 1>

The terminal may map slots for the dynamic HARQ-ACK and the SPS HARQ-ACK in a slot for a dedicated cell corresponding to the slots for the dynamic HARQ-ACK and the SPS HARQ-ACK (may multiplex and transmit dynamic HARQ-ACK and SPS HARQ-ACK).

The dedicated cell may be a default cell defined by specifications. For example, the dedicated cell may be a Pcell, a Pscell, or a PUCCH-Scell. Further, the dedicated cell may be configured based on RRC.

For example, a cell with the largest SCS may be selected as the dedicated cell. This can suppress the latency in HARQ-ACK of the terminal.

FIG. 7 is a diagram for describing an example of Opt. 1 of Proposal 3. In FIG. 7, the numerology of PUCCH cell #1 is different from the numerology of PUCCH cell #2. FIG. 7 illustrates four examples of overlapping of dynamic HARQ-ACK slots and SPS HARQ-ACK slots on different carriers (PUCCH cell #1 and PUCCH cell #2). Dynamic HARQ-ACKs and SPS HARQ-ACKs that overlap with each other on different carriers may be mapped to slots for dedicated cells corresponding to slots for the dynamic HARQ-ACK and the SPS HARQ-ACK (PCell/PScell in example of FIG. 7).

### <Opt. 2>

SPS HARQ-ACK may be multiplexed in a corresponding dynamic HARQ-ACK slot. In other words, the terminal may multiplex and transmit the SPS HARQ-ACK with the dynamic HARQ-ACK in the dynamic HARQ-ACK slot corresponding to an SPS HARQ-ACK slot.

### <Opt. 2-1>

When one SPS HARQ-ACK slot overlaps with a plurality of dynamic HARQ-ACK slots, the terminal may multiplex SPS HARQ-ACK and dynamic HARQ-ACK based on the following Alt. 1 or Alt. 2.

### <Alt. 1>

The terminal may multiplex the SPS HARQ-ACK with dynamic HARQ-ACK in the first dynamic HARQ-ACK slot or the last dynamic HARQ-ARQ slot, of the plurality of dynamic HARQ-ACK slots corresponding to (overlapping with) the one SPS HARQ-ACK slot.

FIG. 8 is a diagram for describing an example of Opt. 2 of Proposal 3. In FIG. 8, the numerology of PUCCH cell #1 is different from the numerology of PUCCH cell #2. FIG. 8 illustrates four examples of overlapping of dynamic HARQ-ACK slots and SPS HARQ-ACK slots on different carriers (PUCCH cell #1 and PUCCH cell #2).

For example, as indicated by arrow A5 of FIG. 8, the terminal may multiplex the SPS HARQ-ACK and the dynamic HARQ-ACK in the first dynamic HARQ-ACK slot of the two dynamic HARQ-ACK slots overlapping with the one SPS HARQ-ACK slot. Further, as indicated by arrow A6 of FIG. 8, the terminal may multiplex the SPS HARQ-ACK with the dynamic HARQ-ACK in the first dynamic HARQ-ACK slot of the two dynamic HARQ-ACK slots overlapping with the one SPS HARQ-ACK slot.

### <Alt. 2>

The terminal may multiplex SPS HARQ-ACK with dynamic HARQ-ACK in a dynamic HARQ-ACK slot with the smallest cell index, the largest cell index, or the nearest cell index, of the plurality of dynamic HARQ-ACK slots corresponding to the one SPS HARQ-ACK slot.

For example, as indicated by arrow A6 of FIG. 8, the terminal may multiplex the SPS HARQ-ACK with the dynamic HARQ-ACK in the dynamic HARQ-ACK slot with the largest cell index (cell index #3) of the two dynamic HARQ-ACK slots (cell indices #1 and #3) corresponding to the one SPS HARQ-ACK slot.

### <Opt. 2-2>

When a plurality of SPS HARQ-ACK slots overlaps with the same (one) dynamic HARQ-ACK slot, the terminal may multiplex SPS HARQ-ACK and dynamic HARQ-ACK based on the following Alt. 1 or Alt. 2.

### <Alt. 1>

When the plurality of SPS HARQ-ACK slots overlaps with the same dynamic HARQ-ACK slot, the terminal may handle it as an error.

### <Alt. 2>

When the plurality of SPS HARQ-ACK slots overlaps with the same dynamic HARQ-ACK slot, the terminal may multiplex SPS HARQ-ACKs of the plurality of SPS HARQ-ACK slots with the dynamic HARQ-ACK of the same dynamic HARQ-ACK slot.

For example, as indicated by arrows A7a and A7b of FIG. 8, the terminal may multiplex the plurality of SPS HARQ-ACKs with the dynamic HARQ-ACK of the same dynamic HARQ-ACK slot. Further, as indicated by arrows A8a and A8b of FIG. 8, the terminal may multiplex the plurality of SPS HARQ-ACKs with the dynamic HARQ-ACK of the same dynamic HARQ-ACK slot.

### <Opt. 3>

Dynamic HARQ-ACK may be multiplexed in a corresponding SPS HARQ-ACK slot. In other words, the terminal may multiplex the dynamic HARQ-ACK with SPS HARQ-ACK in a slot for the SPS HARQ-ACK corresponding to the slot for the dynamic HARQ-ACK. For example, "dynamic HARQ-ACK" described in Opt.2 may be replaced with "SPS HARQ-ACK," and "SPS HARQ-ACK" described in Opt.2 may be replaced with "dynamic HARQ-ACK."

### <Details of Cases 2/3/4>

In Case 2/3/4, the overlapping of dynamic HARQ-ACK slots on different carriers is assumed. In Case 2/3/4, the overlapping of SPS HARQ-ACK slots on different carriers is also assumed. In other words, in Case 2/3/4, the overlapping between dynamic HARQ-ACK slots is assumed as well as the overlapping between SPS HARQ-ACK slots is assumed.

In Case 2/3/4, the terminal may multiplex dynamic HARQ-ACK(s) and/or SPS HARQ-ACK(s) by the following steps.

### <Step 1>

The terminal resolves (multiplexes) an SPS HARQ-ACK slot and a dynamic HARQ-ACK slot that overlap with each other on the same carrier. The SPS HARQ-ACK slot and the dynamic HARQ-ACK slot that overlap with each other on the same carrier are the same slot. The SPS HARQ-ACK slot and the dynamic HARQ-ACK slot are simply multiplexed in this slot (the same slot). This slot is regarded as a dynamic HARQ-ACK slot in subsequent processing.

### <Step 2>

The terminal resolves an SPS HARQ-ACK slot and a dynamic HARQ-ACK slot that overlap with each other on different carriers. The terminal may resolve the SPS HARQ-ACK slot and the dynamic HARQ-ACK slot on the different carriers based on any of the following Opt. 1 to Opt. 4.

### <Opt. 1>

The terminal may individually resolve the overlapping in dynamic HARQ-ACK slots and the overlapping in SPS HARQ-ACK slots. After the individual multiplexing, the terminal may resolve the overlapping between a dynamic HARQ-ACK slot and an SPS HARQ-ACK slot.

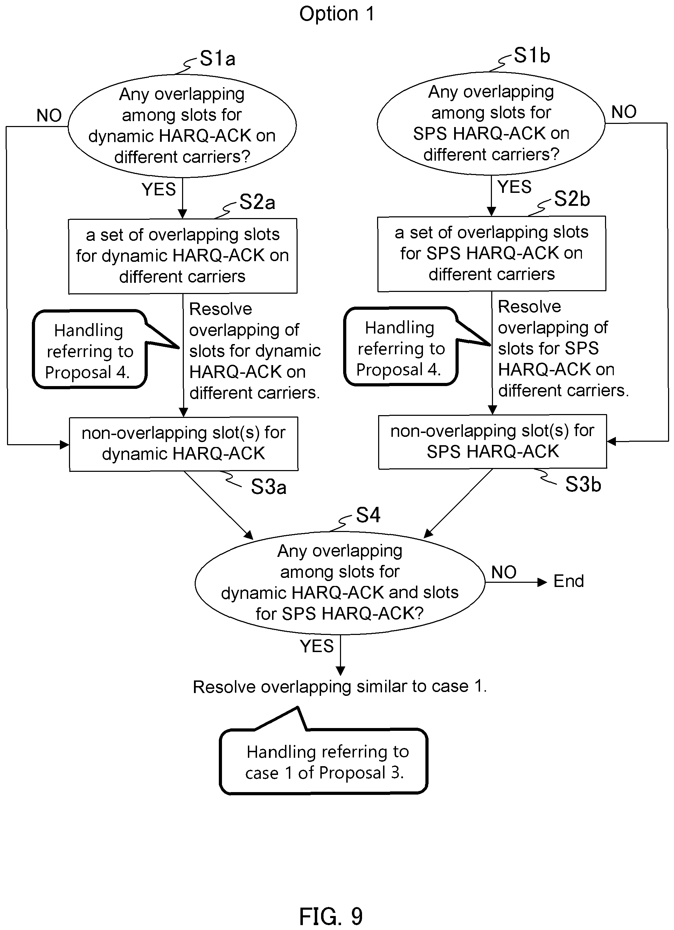

FIG. 9 is a flowchart indicating an example of overlapping resolution. The terminal determines whether overlapping between dynamic HARQ-ACK slots on different carriers is present (S1a).

When determining that the overlapping is present in S1a, the terminal configures the overlapping dynamic HARQ-ACK slots on different carriers as one set (S2a). The terminal resolves the overlapping of dynamic HARQ-ACK slots on the different carriers, which have been configured as one set (see Proposal 4).

The terminal determines whether overlapping between SPS HARQ-ACK slots on different carriers is present (S1b).

When determining that the overlapping is present in S1b, the terminal configures the overlapping SPS HARQ-ACK slots on different carriers as one set (S2b). The terminal resolves the overlapping of SPS HARQ-ACK slots on the different carriers, which have been configured as one set (see Proposal 4).

After resolving the overlapping of dynamic HARQ-ACK slots and resolving the overlapping of SPS HARQ-ACK slots (S3a and S3b), the terminal determines whether overlapping between a dynamic HARQ-ACK slot and an SPS HARQ-ACK slot is present (S4). When the overlapping is present, the terminal executes the processing as in Case 1 of Proposal 3. When the overlapping is not present, the terminal terminates the processing of the flowchart.

### <Opt. 2>

The terminal may resolve together the overlapping of dynamic HARQ-ACK slots and the overlapping of SPS HARQ-ACK slots.

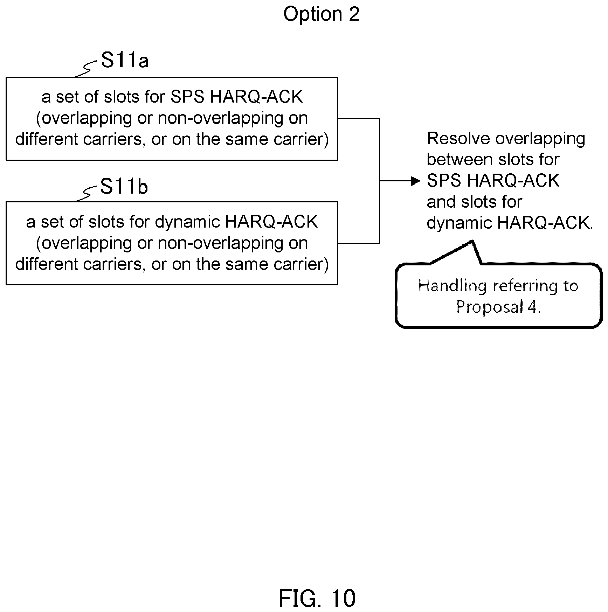

FIG. 10 is a flowchart indicating another example of overlapping resolution. The terminal configures the overlapping SPS HARQ-ACK slots on different carriers as one set and configures the overlapping dynamic HARQ-ACK slots on different carriers as one set (S11a and S11b). The terminal then resolves the overlapping between the SPS HARQ-ACK slots and the dynamic HARQ-ACK slots, which have been configured as one set (see Proposal 4).

### <Opt. 3>

The terminal resolves the overlapping between SPS HARQ-ACK slots. The terminal may then resolve the overlapping between an SPS HARQ-ACK slot and a dynamic/SPS HARQ-ACK slot.

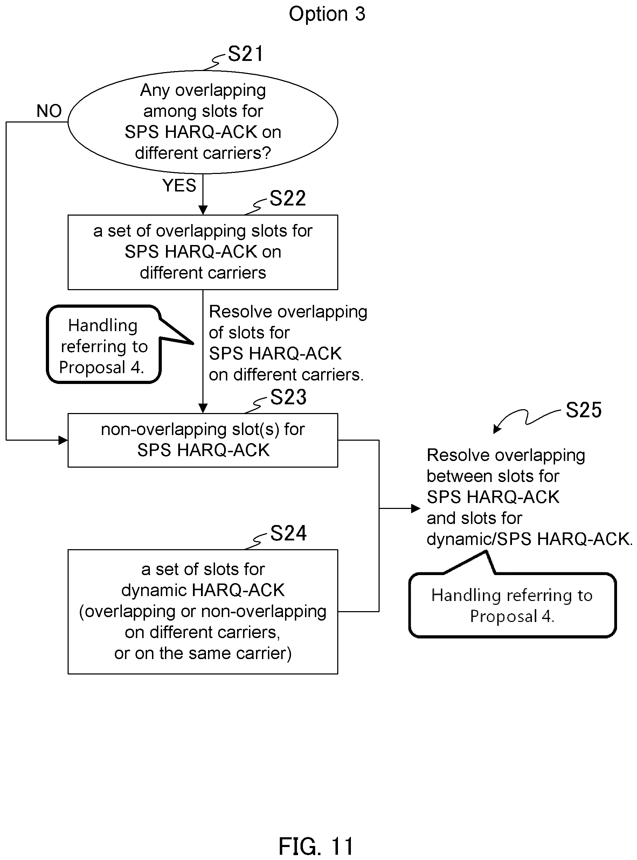

FIG. 11 is a flowchart indicating still another example of overlapping resolution. The terminal determines whether the overlapping between SPS HARQ-ACK slots on different carriers is present (S21).

When determining that the overlapping is present in S21, the terminal configures the overlapping SPS HARQ-ACK slots on different carriers as one set (S22). The terminal resolves the overlapping of SPS HARQ-ACK slots on the different carriers, which have been configured as one set (see Proposal 4).

The terminal resolves the overlapping between an SPS HARQ-ACK slot and a dynamic/SPS HARQ-ACK slot (S23, S24, and S25 (see Proposal 4)).

### <Opt. 4>

The terminal resolves the overlapping between dynamic HARQ-ACK slots. The terminal may then resolve the overlapping between a dynamic HARQ-ACK slot and a dynamic/SPS HARQ-ACK slot.

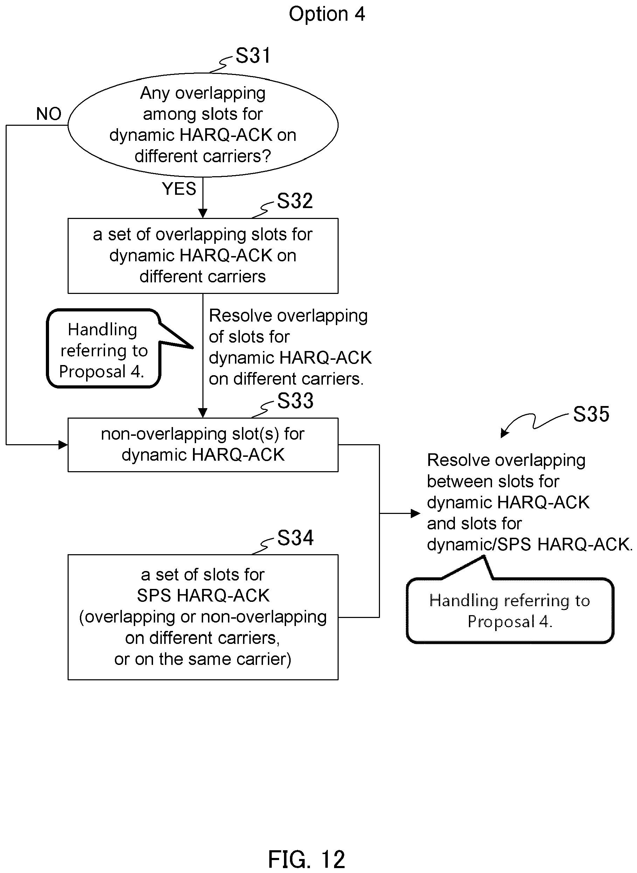

FIG. 12 is a flowchart indicating yet another example of overlapping resolution. The terminal determines whether overlapping between dynamic HARQ-ACK slots on different carriers is present (S31).

When determining that the overlapping is present in S31, the terminal configures the overlapping dynamic HARQ-ACK slots on different carriers as one set (S32). The terminal resolves the overlapping of dynamic HARQ-ACK slots, which have been configured as one set (see Proposal 4).

The terminal resolves the overlappig between a dynamic HARQ-ACK slot and a dynamic/SPS HARQ-ACK slot (S33, S34, and S35 (see Proposal 4)).

### <Proposal 4: Handling for Overlapping among Slots for Dynamic and/or SPS HARQ-ACK>

The terminal determines whether overlapping between HARQ-ACK slots on different cells is present. When determining that the overlapping is not present, the terminal terminates multiplexing processing. When determining that the overlapping is present, the terminal may apply the following options.

### <Opt. 1>

The terminal may map HARQ-ACKs of the HARQ-ACK slots overlapping on different carriers to corresponding a slot for a dedicated cell. The dedicated cell may be a default cell defined by specifications (e.g., Pcell, Pscell, or PUCCH-Scell) or may be configured based on RRC.

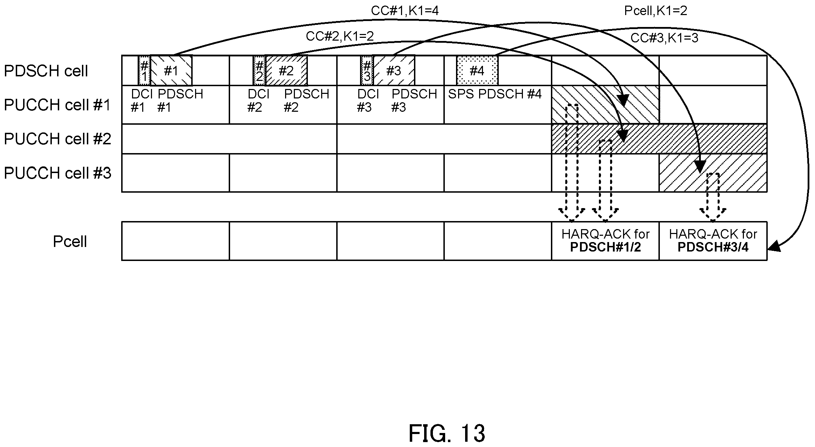

FIG. 13 is a diagram for describing an example of Opt. 1 of Proposal 4. As illustrated in FIG. 13, HARQ-ACKs of HARQ-ACK slots overlapping on different carriers may be mapped to a dedicated cell (Pcells in example of FIG. 13).

### <Opt. 2>

The terminal may multiplex HARQ-ACKs of slots overlapping on different cells. The erminal may multiplex HARQ-ACKs based on the following Opt. 2A or Opt. 2B.

### <Opt. 2A>

The terminal may resolve a set of overlapping HARQ-ACK slots on different carriers by using a loop. Each loop may resolve a subset of overlapping HARQ-ACK slots on different carriers.

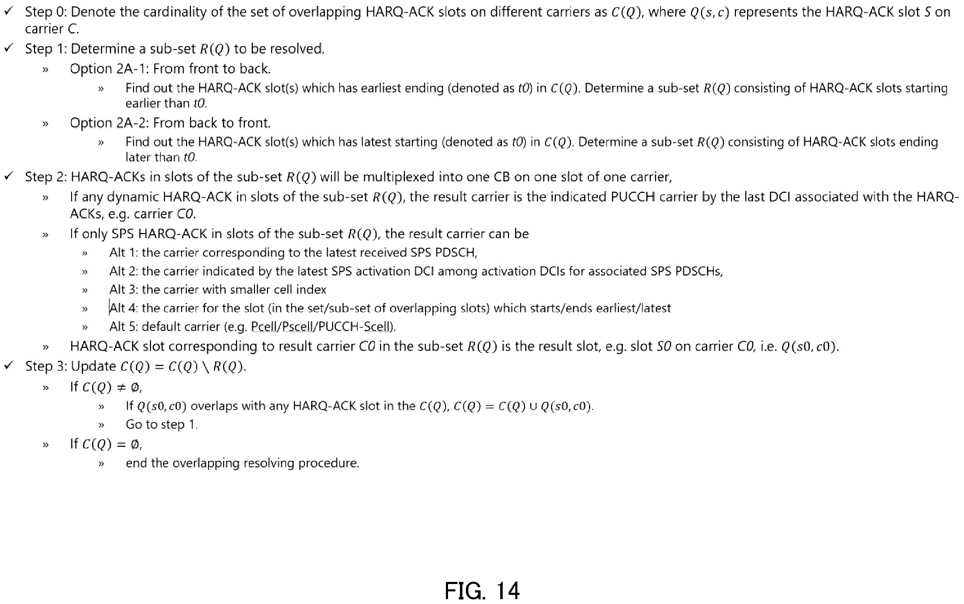

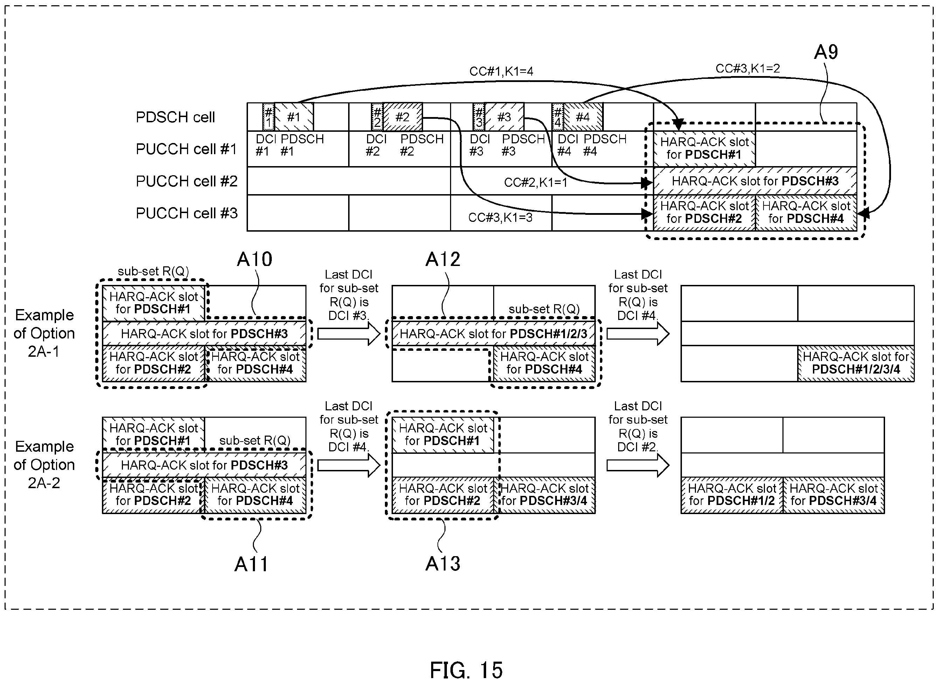

FIG. 14 indicates a loop example in Opt. 2A of Proposal 4. FIG. 15 illustrates an exemplary operation of the loop example in Opt. 2A of Proposal 4. In dotted frame A9 of FIG. 15, HARQ-ACK slots overlapping on different carriers are illustrated. The terminal eliminates the overlap illustrated in dotted frame A9 of FIG. 15 by the loop processing indicated in FIG. 14.

The terminal terms, based on Step 0 of the loop, cardinality of a set of overlapping HARQ-ACK slots on different carriers (e.g., set of HARQ-ACK slots illustrated in dotted frame A9 of FIG. 15) as C(Q).

The terminal selects, based on Step 1 of the loop, subset R(Q) of the overlapping HARQ-ACK slots. In Opt. 2A-1 of FIG. 14, for example, as illustrated in dotted frame A10 of FIG. 15, the terminal selects, as subset R(Q), HARQ-ACK slots to be multiplexed, in the time passage directoin. Further, in Opt. 2A-2 of FIG. 14, for example, as illustrated in dotted frame A11 of FIG. 15, the terminal selects, as subset R (Q), HARQ-ACK slots to be multiplexed, in the direction opposite to the time passage direction.

In the selected subset R(Q), the terminal multiplexes overlapping HARQ-ACK slots based on Step 2 of the loop. By way of example, the terminal multiplexes PDSCH #1 and PDSCH #2 in dotted frame A10 illustrated in FIG. 15 with PDSCH #3. The terminal also multiplexes PDSCH #3 in dotted frame A11 illustrated in FIG. 15 with PDSCH #4.

The middle center diagram of FIG. 15 illustrates a result of multiplexing of PDSCH #1 and PDSCH #2 in dotted frame A10 with PDSCH #3. The bottom center diagram of FIG. 15 illustrates a result of multiplexing of PDSCH #3 in dotted frame A11 with PDSCH #4.

The terminal terms C(Q), excluding subset R(Q), as a new C(Q) (updates C(Q)), based on Step 3 of the loop. When the updated C(Q) is an empty set, the terminal terminates the loop. When the updated C(Q) is not an empty set, the terminal returns to Step 1.

When returning to Step 1, the terminal selects subset R(Q) of overlapping HARQ-ACK slots. For example, in Opt. 2A-1 of FIG. 14, as illustrated in dotted frame A12 of FIG. 15, the terminal selects, as subset R(Q), HARQ-ACK slots to be multiplexed, in the time passage direction. Further, for example, in Opt. 2A-2 of FIG. 14, as illustrated in dotted frame A13 of FIG. 15, the terminal selects, as subset R(Q), HARQ-ACK slots to be multiplexed, in the direction opposite to the time passage direction.

In FIG. 15, an example has been described in which only dynamic HARQ-ACK slots overlap with each other on different carriers. In the following, an example will be described in which a dynamic HARQ-ACK slot and an SPS HARQ-ACK slot overlap with each other on different carriers.

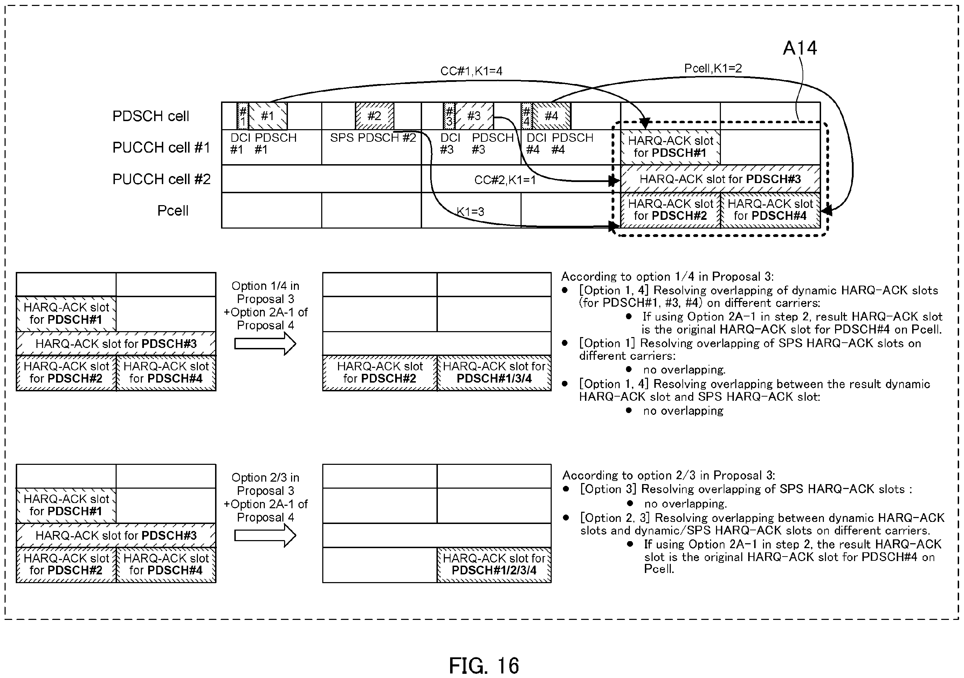

FIG. 16 illustrates another exemplary operation of the loop example in Opt. 2A of Proposal 4. In FIG. 16, a dynamic HARQ-ACK slot and an SPS HARQ-ACK slot overlap with each other on different carriers, as illustrated in dotted frame A14. The terminal eliminates the overlapping indicated in dotted frame A14 by the loop processing illustrated in FIG. 14 and Opt. 1 to Opt. 4 of Proposal 3. Incidentally, the middle left-side diagram and the bottom left-side diagram of FIG. 16 are each obtained by extracting the overlapping indicated in dotted frame A14.

### <Opt. 1/4 in Proposal 3 + Option 2A-1 of Proposal 4>

In Opt. 1 or Opt. 4 of Proposal 3, the terminal resolves the overlapping of dynamic HARQ-ACK slots on different carriers. For example, in the middle left-side diagram illustrating the overlapping in FIG. 16, the terminal resolves the overlapping of HARQ-ACK slots for PDSCH #1, PDSCH #3, and PDSCH #4. When the terminal executes the processing of Option. 2A-1 and Step 2 of FIG. 14, for example, an HARQ-ACK slot is an original HARQ-ACK slot for PDSCH #4 on the Pcell (see PDSCHs #1/3/4 in diagram indicated by the arrowhaed in the middle of FIG. 16).

In Opt. 1 of Proposal 3, the overlapping of SPS HARQ-ACK slots on different carriers is also resolved (see, e.g., S1b to S3b of FIG. 9). Note that, in the middle left-side diagram illustrating the overlapping in FIG. 16, there is no overlapping of SPS HARQ-ACK slots on different carriers.

In Opt. 1 and Opt. 4 of Proposal 3, the overlapping of a dynamic HARQ-ACK slot and an SPS HARQ-ACK slot on different carriers is eliminated (see, e.g., S4 of FIG. 9 and S35 of FIG. 12). Note that, in the middle left-side diagram llustrating the overlapping in FIG. 16, there is no overlapping of SPS HARQ-ACK slots on different carriers.

The diagram indicated by the arrowhead in the middle of FIG. 16 illustrates a result of the terminal having once executed the loop processing of FIG. 14 (Opt. 1/4 in Proposal 3 + Option 2A-1 of Proposal 4). In the diagram indicated by the arrowhead in the middle of FIG. 16, there is no overlapping pattern to be resolved by Opt. 1 and Opt. 4 of Proposal 3. Therefore, the diagram of the overlapping indicated by the arrowhead in the middle of FIG. 16 is a result of resolution of the overlapping indicated in dotted frame A14, based on the loop processing illustrated in FIG. 14 and Opt. 1 or Opt. 4 of Proposal 3.

### <Opt. 2/3 in Proposal 3 + Option 2A-1 of Proposal 4>

In Opt. 3 of Proposal 3, the terminal resolves the overlapping between SPS HARQ-ACK slots on different carriers. Note that, in the bottom left-side diagram llustrating the overlapping in FIG. 16, there is no overlapping of SPS HARQ-ACK slots on different carriers.

In Opt. 2 of Proposal 3, the terminal resolves together the overlapping of dynamic HARQ-ACK slots and the overlapping of SPS HARQ-ACK slots on different carriers. The terminal, in Opt. 2 of Proposal 3, resolves the overlapping between SPS HARQ-ACK slots on different carriers and then resolves the overlapping between a dynamic HARQ-ACK slot and a dynamic/SPS HARQ-ACK slot. When the terminal executes the processing of Option. 2A-1 and Step 2 of FIG. 14, for example, an HARQ-ACK slot is an original HARQ-ACK slot for PDSCH #4 on the Pcell (see PDSCHs #1/2/3/4 in diagram indicated by the arrowhaed in the middle of FIG. 16).

The diagram indicated by the arrowhead in the bottom of FIG. 16 illustrates a result of the terminal having once executed the loop processing of FIG. 14 (Opt. 1/4 in Proposal 3 + Option 2A-1 of Proposal 4). In the diagram indicated by the arrowhead in the bottom of FIG. 16, there is no overlapping pattern to be resolved by Opt. 2 and Opt. 3 of Proposal 3. Therefore, the diagram of the overlapping indicated by the arrowhead in the bottom of FIG. 16 is a result of resolution of the overlapping indicated in dotted frame A14, based on the loop processing illustrated in FIG. 14 and Opt. 2 or Opt. 3 of Proposal 3.

### <Opt. 2B>

The terminal may resolve the overlapping of HARQ-ACK slots on different carriers in one step. Resultant carrier and slot in the multiplexed Code Book (CB) determination are similar to the description in Step 2 of Opt. 2A. However, "subset R(Q)" in Step 2 of Opt. 2A is replaced with "the whole set of overlapping HARQ-ACK slots," i.e., C(Q).

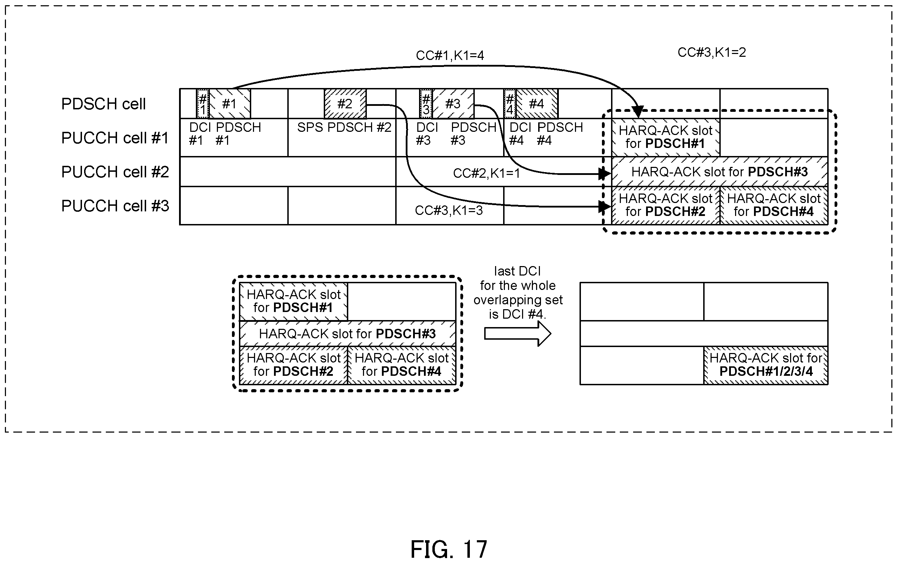

FIG. 17 is a diagram for describing an exemplary operation in Opt. 2B of Proposal 4. The terminal may resolve the overlapping of HARQ-ACK slots on different carriers in one step, as illustrated in FIG. 17.

### <Variations>

Which of the plurality of options is applied, and/or which of the plurality of alternatives is applied may be determined by the following methods:
- It is/they are configured by higher-layer parameter;
- The UE reports it/them as UE capability(ies);
- It is/they are described in the specifications;
- It is/they are determined based on configuration of higher-layer parameter and reported UE capability; and
- It is/they are determined by a combination of two or more of the above determinations.
Note that the higher layer parameter may be an RRC parameter and a Media Access Control Control Element (MAC CE), or may be a combination thereof.

In Proposal 1, whether to apply Opt. 1 or Opt. 2 may depend on whether or not the semi-static PUCCH carrier switching is also enabled. For example, when the semi-static PUCCH carrier switching is also enabled, the target cell is, for example, a Pcell, a PSCell, or a PUCCH-Scell. Otherwise, when only the dynamical PUCCH carrier switching is enabled, the target cell is a cell indicated in the DCI for the SPS configuration (activation DCI).

A slot may be replaced with a subslot.

Proposal 3 and Proposal 4 may be applied to an SPS HARQ-ACK slot before and after the semi-static PUCCH carrier switching.

### <UE capability>

The UE capability representing the capability of the UE may include the following information indicating the capability of the UE. Note that the information representing the capability of the UE may correspond to information defining the capability of the UE.
- Information defining whether the UE supports the PUCCH carrier switching;
- Information defining whether the UE supports the dynamic PUCCH carrier switching;
- Information defining whether the UE performs overlapping and/or multiplexing of dynamic HARQ-AKC slots on different carriers;
- Information defining whether the UE performs overlapping and/or multiplexing of SPS HARQ-AKC slots on different carriers; and
- Information defining whether the UE performs overlapping and/or multiplexing of a dynamic HARQ-AKC slot and an SPS HARQ-AKC slot on different carriers.

### <Example of Radio Communication System>

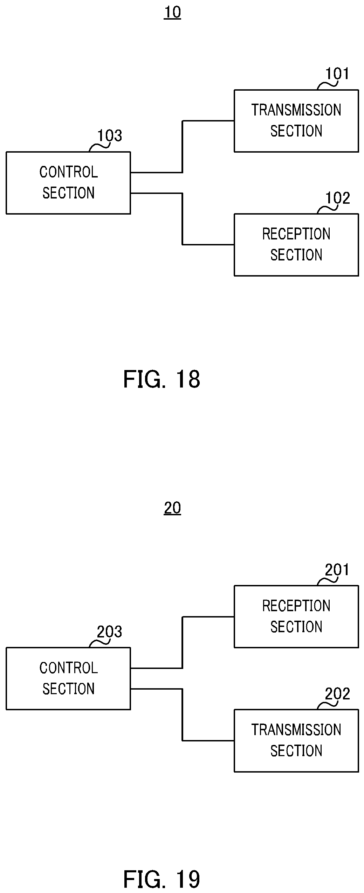

A radio communication system according to the present embodiment includes base station 10 illustrated in FIG. 18 and terminal 20 illustrated in FIG. 19. The number of base stations 10 and the number of terminals 20 are not particularly limited. For example, the system may be as illustrated in FIG. 1 in which two base stations 10 (base stations 10-1 and 10-2) communicate with one terminal 20. The radio communication system may be a radio communication system conforming to New Radio (NR). Illustratively, the radio communication system may be a radio communication system conforming to a scheme called URLLC and/or IIoT.

Note that, the radio communication system may be a radio communication system conforming to a scheme called 5G, Beyond 5G, 5G Evolution or 6G.

Base station 10 may be referred to as an NG-RAN Node, an ng-eNB, an eNodeB (eNB), or a gNodeB (gNB). Terminal 20 may be referred to as User Equipment (UE). Further, base station 10 may be regarded as an apparatus included in a network to which terminal 20 is connected.

The radio communication system may include a Next Generation-Radio Access Network (hereinafter referred to as NG-RAN). The NG-RAN includes a plurality of NG-RAN Nodes, specifically a plurality of gNBs (or ng-eNBs), and is connected to a core network (5GC, not illustrated) conforming to 5G. Note that, the NG-RAN and the 5GC may be simply represented as "network."

Base station 10 performs radio communication with terminal 20. For example, the radio communication to be performed conforms to the NR. By controlling radio signals transmitted from a plurality of antenna elements, at least one of base station 10 and terminal 20 may support Massive Multiple-Input Multiple-Output (MIMO) that generates a beam (BM) having higher directivity. Further, at least one of base station 10 and terminal 20 may support carrier aggregation (CA) that aggregates and uses a plurality of component carriers (CC). Further, at least one of base station 10 and terminal 20 may support, e.g., dual connectivity (DC) in which communication is performed between terminal 20 and each of a plurality of base stations 10.

The radio communication system may support a plurality of frequency bands. For example, the radio communication system supports Frequency Range (FR) 1 and FR 2. , For example, the frequency bands of the respective FRs are as follows:
- FR 1: 410 MHz to 7.125 GHz; and
- FR 2: 24.25 GHz to 52.6 GHz.

In FR 1, a Sub-Carrier Spacing (SCS) of 15 kHz, 30 kHz or 60kHz may be used, and a bandwidth (BW) of 5 MHz to 100 MHz may be used. FR 2 is, for example, a higher frequency than FR 1. In FR 2, an SCS of 60 kHz or 120 kHz may be used and a bandwidth (BW) of 50 MHz to 400 MHz may be used. FR 2 may also include an SCS of 240 kHz.

The radio communication system in the present embodiment may support a higher frequency band than the frequency band of FR 2. For example, the radio communication system in the present embodiment may support a frequency band exceeding 52.6 GHz and up to 114.25 GHz. Such a high frequency band may be referred to as "FR 2x."

Further, Cyclic Prefix-Orthogonal Frequency Division Multiplexing (CP-OFDM) / Discrete Fourier Transform-Spread-Orthogonal Frequency Division Multiplexing (DFT-S-OFDM) having a sub-carrier spacing (SCS) larger than that in the examples described above may be applied. Further, the DFT-S-OFDM may be applied to either one or both of uplink and downlink.

In the radio communication system, a slot configuration pattern of Time Division Duplex (TDD) may be configured. For example, a pattern representing the order of two or more slots among a slot for transmitting a downlink (DL) signal, a slot for transmitting an uplink (UL) signal, a slot in which a DL signal(s), a UL signal(s), and a guard symbol(s) are mixed, and a slot in which a signal to be transmitted is flexibly changed may be specified in the slot configuration pattern.

Further, in the radio communication system, it is possible to perform PUSCH (or Physical Uplink Control Channel (PUCCH)) channel estimation by using a demodulation reference signal (DMRS) per slot, but it is further allowed to perform PUSCH (or PUCCH) channel estimation by using DMRSs assigned to a plurality of slots, respectively. Such channel estimation may be referred to as joint channel estimation or may be referred to as another name, such as cross-slot channel estimation.

In a plurality of slots, terminal 20 may transmit DMRSs assigned to the plurality of slots, respectively, such that base station 10 can perform the joint channel estimation using DMRSs.

Further, in the radio communication system, an enhanced function may be added to the function of feedback from terminal 20 to base station 10. For example, an enhanced feedback function of the terminal for HARQ-ACK may be added.

Next, configurations of base station 10 and terminal 20 will be described. Note that the configurations of base station 10 and terminal 20 described below illustrate an example of functions related to the present embodiment. Base station 10 and terminal 20 may have functions that are not illustrated. Further, functional classification and/or names of functional sections are/is not limited as long as the functions serve for executing operations according to the present embodiment.

### <Configuration of Base Station>

FIG. 18 is a block diagram illustrating an exemplary configuration of base station 10 according to the present embodiment. Base station 10 includes, for example, transmission section 101, reception section 102, and control section 103. Base station 10 communicates wirelessly with terminal 20 (see FIG. 17).

Transmission section 101 transmits a downlink (DL) signal to terminal 20. For example, transmission section 101 transmits the DL signal under the control of control section 103.

The DL signal may include, for example, a downlink data signal and control information (e.g., Downlink Control Information (DCI)). The DL signal may also include information (e.g., UL grant) indicating scheduling related to signal transmission of terminal 20. Moreover, the DL signal may include higher layer control information (e.g., Radio Resource Control (RRC) control information). Furthermore, the DL signal may include a reference signal.

Channels used for DL signal transmission include, for example, a data channel and a control channel For example, the data channel may include a Physical Downlink Shared Channel (PDSCH), and the control channel may include a Physical Downlink Control Channel (PDCCH). For example, base station 10 transmits control information to terminal 20 by using PDCCH and transmits a downlink data signal by using PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signal such as the DMRS and the PTRS is used for demodulation of a downlink data signal and is transmitted by using PDSCH.

Reception section 102 receives an uplink (UL) signal transmitted from terminal 20. For example, reception section 102 receives the UL signal under the control of control section 103.

Control section 103 controls communication operations of base station 10 including transmission processing in transmission section 101 and reception processing in reception section 102.

By way of example, control section 103 acquires information such as data and control information from a higher layer and outputs the data and control information to transmission section 101. Further, control section 103 outputs the data, the control information, and/or the like received from reception section 102 to the higher layer.

For example, control section 103 allocates a resource (or channel) used for DL signal transmission and reception and/or a resource used for UL signal transmission and reception, based on the signal (e.g., data, control information and/or the like) received from terminal 20 and/or the data, the control information, and/or the like acquired from the higher layer. Information on the allocated resource(s) may be included in control information to be transmitted to terminal 20.

Control section 103 configures a PUCCH resource as an example of the allocation of the resource used for UL transmission and reception. Information on the PUCCH configuration such as a PUCCH cell timing pattern (PUCCH configuration information) may be indicated to terminal 20 by RRC.

### <Configuration of Terminal>

FIG. 19 is a block diagram illustrating an exemplary configuration of terminal 20 according to the present embodiment. Terminal 20 includes, for example, reception section 201, transmission section 202, and control section 203. Terminal 20 communicates wirelessly with, for example, base station 10.

Reception section 201 receives a DL signal transmitted from base station 10. For example, reception section 201 receives the DL signal under the control of control section 203.

Transmission section 202 transmits an UL signal to base station 10. For example, transmission section 202 transmits the UL signal under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, a data channel and a control channel. For example, the data channel includes a Physical Uplink Shared Channel (PUSCH) and the control channel includes a Physical Uplink Control Channel (PUCCH). For example, terminal 20 receives control information from base station 10 by using PUCCH and transmits an uplink data signal by using PUSCH.

The reference signal included in the UL signal may include, for example, at least one of a DMRS, a PTRS, a CSI-RS, an SRS, and a PRS. For example, the reference signal such as the DMRS and the PTRS is used for demodulation of an uplink data signal and is transmitted by using an uplink channel (e.g., PUSCH).

Control section 203 controls communication operations of terminal 20 including reception processing in reception section 201 and transmission processing in transmission section 202.

By way of example, control section 203 acquires information such as data and control information from a higher layer and outputs the data and control information to transmission section 202. Further, control section 203 outputs, for example, the data, the control information, and/or the like received from reception section 201 to the higher layer.

For example, control section 203 controls transmission of information to be fed back to base station 10. The information to be fed back to base station 10 may include, for example, HARQ-ACK, Channel State Information (CSI), and a Scheduling Request (SR). The information to be fed back to base station 10 may be included in the UCI. The UCI is transmitted in a PUCCH resource.

Control section 203 configures a PUCCH resource based on the configuration information (e.g., configuration information such as PUCCH cell timing pattern and/or DCI, which are/is indicated by RRC) received from base station 10. Control section 203 determines the PUCCH resource to be used for transmitting the information to be fed back to base station 10. Under the control of control section 203, transmission section 202 transmits the information to be fed back to base station 10 in the PUCCH resource determined by control section 203.

Note that, the channels used for DL signal transmission and the channels used for UL signal transmission are not limited to the examples mentioned above. For example, the channels used for the DL signal transmission and the channels used for the UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

Transmission section 202 may transmit, by using a cell different from a cell in which a signal based on SPS has been received, a response signal for the signal. Control section 203 may interpret, based on a subcarrier spacing of the cell in which the response signal is transmitted, a parameter for determining a transmission slot for the response signal and determine a slot for transmitting the response signal. In the other word, control section 203 may refer to a slot on the cell in which the response signal is transmitted and determine a slot for transmitting the response signal, based on a parameter for determining the slot for transmitting the response signal.

The signal based on SPS may be SPS PDSCH. The response signal may be SPS HARQ-ACK. The response signal may be referred to as a delivery acknowledgment signal or a retransmission control signal. The "cell in which the response signal is transmitted" may be referred to as the "target cell." The parameter may be K1. The transmission of the response signal for the signal by using the cell different from the cell in which the signal based on SPS has been received may be regarded as the PUCCH carrier switching.

Control section 203 may determine the cell in which the response signal is transmitted, based on a DCI. Transmission section 202 may transmit the response signal in a predetermined cell. Control section 203 may determine the cell in which the response signal is transmitted, based on higher layer signaling.

Besides, transmission section 202 may transmit, by using a cell different from a cell in which a signal based on dynamic scheduling has been received, a response signal for the signal. Control section 203 may multiplex slots for response signals to be transmitted in different cells, respectively, the slots overlapping with each other, each of the response signals being the response signal for the signal based on the dynamic scheduling. The signal based on the dynamic scheduling may be the DCI-based PDSCH. The response signal may be the dynamic HARQ-ACK. The transmitssion of the response signal of the signal by using the cell different from the cell in which the signal based on the dynamic scheduling has been received may be regarded as the PUCCH carrier switching.

Transmission section 202 may transmit, by using a cell different from a cell in which a semi-static signal based on SPS has been received, a semi-static response signal for the semi-static signal. Control section 203 may multiplex a slot for the response signal and a slot for the semi-static response signal, the slots overlapping with each other. The semi-static signal may be the SPS PDSCH. The semi-static response signal may be the SPS HARQ-ACK.

Control section 203 may multiplex, in a predetermined cell, the slots for the response signals to be transmitted in the different cells, respectively. Control section 203 may multiplex, in a cell indiated by higher layer signaling, the slots for the response signals to be transmitted in the different cells, respectively.

The present disclosure has been described, thus far.

### <Hardware Configuration and/or the like>

Note that, the block diagrams used to describe the embodiment illustrate blocks on the basis of functions. These functional blocks (component sections) are implemented by any combination of at least hardware or software. A method for implementing the functional blocks is not particularly limited. That is, the functional blocks may be implemented using one physically or logically coupled apparatus. Two or more physically or logically separate apparatuses may be directly or indirectly connected (for example, via wires or by radio), and the plurality of apparatuses may be used to implement the functional blocks. The functional blocks may be implemented by combining software with the one apparatus or the plurality of apparatuses described above.

The functions include, but not limited to, judging, deciding, determining, computing, calculating, processing, deriving, investigating, searching, confirming, receiving, transmitting, outputting, accessing, solving, selecting, choosing, establishing, comparing, supposing, expecting, regarding, broadcasting, notifying, communicating, forwarding, configuring, reconfiguring, allocating, mapping, assigning, and the like. For example, a functional block (component section) that functions to achieve transmission is referred to as "transmitting unit," "transmission section," or "transmitter." The methods for implementing the functions are not limited specifically as described above.

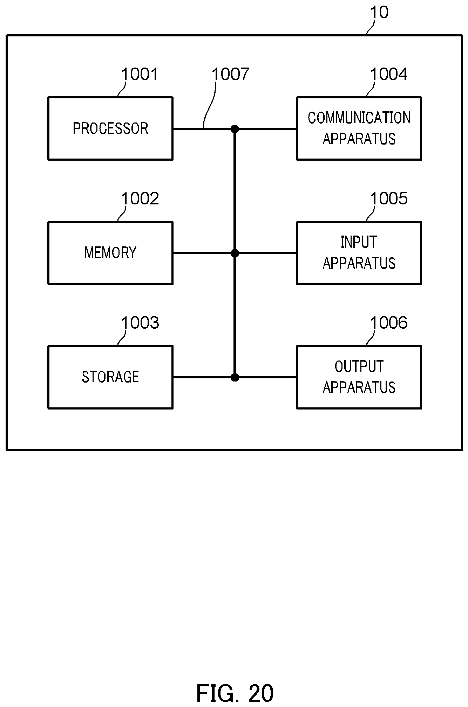

For example, the base station, the terminal, and the like according to an embodiment of the present disclosure may function as a computer that executes processing of a wireless communication method of the present disclosure. FIG. 20 illustrates an example of hardware configurations of the base station and the terminal according to an embodiment of the present disclosure. Base station 10 and terminal 20 described above may be each physically constituted as a computer apparatus including processor 1001, memory 1002, storage 1003, communication apparatus 1004, input apparatus 1005, output apparatus 1006, bus 1007, and the like.

Note that, the term "apparatus" in the following description can be replaced with a circuit, a device, a unit, or the like. The hardware configurations of base station 10 and of terminal 20 may include one apparatus or a plurality of apparatuses illustrated in the drawings, or may not include part of the apparatuses.

The functions of base station 10 and terminal 20 are implemented by predetermined software (program) loaded into hardware such as processor 1001, memory 1002, and the like, according to which processor 1001 performs the arithmetic and controls communication performed by communication apparatus 1004 or at least one of reading and writing of data in memory 1002 and storage 1003.

Processor 1001 operates an operating system to entirely control the computer, for example. Processor 1001 may be composed of a central processing unit (CPU) including an interface with peripheral apparatuses, control apparatus, arithmetic apparatus, register, and the like. For example, control section 103 and control section 203 as described above may be implemented by processor 1001.

Processor 1001 reads a program (program code), a software module, data, and the like from at least one of storage 1003 and communication apparatus 1004 to memory 1002 and performs various types of processing according to the program (program code), the software module, the data, and the like. As the program, a program for causing the computer to perform at least a part of the operation described in the above embodiment is used. For example, control section 203 of terminal 20 may be implemented by a control program stored in memory 1002 and operated by a control program operating in processor 1001, and the other functional blocks may also be implemented in the same way. While it has been described that the various types of processing as described above are performed by one processor 1001, the various types of processing may be performed by two or more processors 1001 at the same time or in succession. Processor 1001 may be implemented by one or more chips. Note that, the program may be transmitted from a network through a telecommunication line.

Memory 1002 is a computer-readable recording medium and may be composed of, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the wireless communication method according to an embodiment of the present disclosure.

Storage 1003 is a computer-readable recording medium and may be composed of, for example, at least one of an optical disk such as a CD-ROM (Compact Disc ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, and a magnetic strip. Storage 1003 may also be called an auxiliary storage apparatus. The storage medium as described above may be, for example, a database, a server or other appropriate media including at least one of memory 1002 and storage 1003.

Communication apparatus 1004 is hardware (transmission and reception device) for communication between computers through at least one of wired and wireless networks and is also called, for example, a network device, a network controller, a network card, or a communication module. Communication apparatus 1004 may be configured to include a high frequency switch, a duplexer, a filter, a frequency synthesizer, and the like in order to achieve at least one of Frequency Division Duplex (FDD) and Time Division Duplex (TDD), for example. For example, transmission section 101, reception section 102, reception section 201, and transmission section 202, and the like as described above may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) which makes outputs to the outside. Note that, input apparatus 1005 and output apparatus 1006 may be integrated (for example, a touch panel).

The apparatuses, such as processor 1001, memory 1002 and the like, are connected by bus 1007 for communication of information. Bus 1007 may be configured using one bus or using buses different between each pair of the apparatuses.

Furthermore, base station 10 and terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may implement part or all of the functional blocks. For example, processor 1001 may be implemented using at least one of these pieces of hardware.

### <Notification and Signaling of Information>

The notification of information is not limited to the embodiment described in the present disclosure, and the information may be notified by another method. For example, the notification of information may be carried out by one or a combination of physical layer signaling (for example, Downlink Control Information (DCI) and Uplink Control Information (UCI)), higher layer signaling (for example, Radio Resource Control (RRC) signaling, Medium Access Control (MAC) signaling, broadcast information (Master Information Block (MIB), and System Information Block (SIB))), and other signals or a combination thereof. The RRC signaling may be called an RRC message and may be, for example, an RRC connection setup message, an RRC connection reconfiguration message, or the like.

### <Applied System>

The embodiment described in the present specification may be applied to at least one of systems using Long Term Evolution (LTE), LTE-Advanced (LTE-A), SUPER 3G, IMT-Advanced, the 4th generation mobile communication system (4G), the 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems and a next-generation system extended based on the above systems. Additionally or alternatively, a combination of two or more of the systems (e.g., a combination of at least LTE or LTE-A and 5G) may be applied.

### <Processing Procedure and/or the like>

The orders of the processing procedures, the sequences, the flowcharts, and the like of the aspect/embodiment described in the present disclosure may be changed as long as there is no contradiction. For example, elements of various steps are presented in exemplary orders in the methods described in the present disclosure, and the methods are not limited to the presented specific orders.

### <Operation of Base Station>

Specific operations which are described in the present disclosure as being performed by the base station may sometimes be performed by an upper node depending on the situation. Various operations performed for communication with a terminal in a network constituted by one network node or a plurality of network nodes including a base station can be obviously performed by at least one of the base station and a network node other than the base station (examples include, but not limited to, Mobility Management Entity (MME) or Serving Gateway (S-GW)). Although there is one network node in addition to the base station in the case illustrated above, a plurality of other network nodes may be combined (for example, MME and S-GW).

### <Direction of Input and Output>

The information or the like (see the item of <Information and Signals>) can be output from a higher layer (or lower layer) to a lower layer (or higher layer). The information and the like may be input and output through a plurality of network nodes.

### <Handling of Input and Output Information and the like>

The input and output information and the like may be saved in a specific place (for example, memory) or may be managed using a management table. The input and output information and the like can be overwritten, updated, or additionally written. The output information and the like may be deleted. The input information and the like may be transmitted to another apparatus.

### <Determination Method>

The determination may be made based on a value expressed by one bit (0 or 1), based on a Boolean value (true or false), or based on comparison with a numerical value (for example, comparison with a predetermined value).

### <Variations and the like ofAspects>

The aspects/embodiment/Proposals/Opts./Alts. described in the present disclosure may be independently used, may be used in combination, or may be switched and used along the execution. Furthermore, notification of predetermined information (for example, notification indicating "it is X") is not limited to explicit notification, and may be performed implicitly (for example, by not notifying the predetermined information).

While the present disclosure has been described in detail, it is obvious to those skilled in the art that the present disclosure is not limited to the embodiment described in the present disclosure. Modifications and variations of the aspect of the present disclosure can be made without departing from the spirit and the scope of the present disclosure defined by the description of the appended claims. Therefore, the description of the present disclosure is intended for exemplary description and does not limit the present disclosure in any sense.

### <Software>

Regardless of whether the software is called as software, firmware, middleware, a microcode, or a hardware description language or by another name, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the instruction, the information, and the like may be transmitted and received through a transmission medium. For example, when the software is transmitted from a website, a server, or another remote source by using at least one of a wired technique (e.g., coaxial cable, optical fiber cable, twisted pair, and digital subscriber line (DSL)) and a radio technique (e.g., infrared ray and microwave), the at least one of the wired technique and the radio technique is included in the definition of the transmission medium.

### information and Signals>

The information, the signals, and the like described in the present disclosure may be expressed by using any of various different techniques. For example, data, instructions, commands, information, signals, bits, symbols, chips, and the like that may be mentioned throughout the entire description may be expressed by one or a random combination of voltage, current, electromagnetic waves, magnetic fields, magnetic particles, optical fields, and photons.

Note that the terms described in the present disclosure and the terms necessary to understand the present disclosure may be replaced with terms with the same or similar meaning. For example, at least one of the channel and the symbol may be a signal (signaling). The signal may be a message. The component carrier (CC) may be called a carrier frequency, a cell, a frequency carrier, or the like.

### <System and Network>

The terms "system" and "network" used in the present disclosure can be interchangeably used.

### <Names of Parameters and Channels>

The information, the parameters, and the like described in the present disclosure may be expressed using absolute values, using values relative to predetermined values, or using other corresponding information. For example, radio resources may be indicated by indices.

The names used for the parameters are not limitative in any respect. Furthermore, the numerical formulae and the like using the parameters may be different from the ones explicitly disclosed in the present disclosure. Various channels (for example, PUCCH and PDCCH) and information elements, can be identified by any suitable names, and various names assigned to these various channels and information elements are not limitative in any respect.

### <Base Station>

The terms "Base Station (BS)," "radio base station," "fixed station," "NodeB," "eNodeB (eNB)," "gNodeB (gNB)," "access point," "transmission point," "reception point," "transmission/reception point," "cell," "sector," "cell group," "carrier," and "component carrier" may be used interchangeably in the present disclosure. The base station may be called a macro cell, a small cell, a femtocell, or a pico cell.

The base station can accommodate one cell or a plurality of (for example, three) cells. When the base station accommodates a plurality of cells, the entire coverage area of the base station can be divided into a plurality of smaller areas, and each of the smaller areas can provide a communication service based on a base station subsystem (for example, small base station for indoor remote radio head (RRH)). The term "cell" or "sector" denotes part or all of the coverage area of at least one of the base station and the base station subsystem that perform the communication service in the coverage.

### <Mobile Sation>

The terms "Mobile Station (MS)," "user terminal," "User Equipment (UE)," and "terminal" may be used interchangeably in the present disclosure.

The mobile station may be called, by those skilled in the art, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user agent, a mobile client, a client, or by some other appropriate terms.

### <Base Station/Mobile Station>

At least one of the base station and the mobile station may be called a transmission apparatus, a reception apparatus, a communication apparatus, or the like. Note that, at least one of the base station and the mobile station may be a device mounted in a mobile entity, the mobile entity itself, or the like. The mobile entity may be a means of transport (e.g., automobile, airplane, or the like), an unmanned mobile entity (e.g., drone, autonomous driving vehicle, or the like), or a robot (manned or unmanned). Note that, at least one of the base station and the mobile station also includes an apparatus that does not necessarily move during communication operation. For example, at least one of the base station and the mobile station may be Internet-of Things (IoT) equipment such as a sensor.

The base station in the present disclosure may also be replaced with the terminal. For example, the embodiment of the present disclosure may find application in a configuration that results from replacing communication between the base station and the terminal with communication between multiple terminals (such communication may, for example, be referred to as device-to-device (D2D), vehicle-to-everything (V2X), or the like). In this case, terminal 20 may be configured to have the functions that base station 10 described above has. The wordings "uplink" and "downlink" may be replaced with a corresponding wording for inter-terminal communication (for example, "side"). For example, an uplink channel, a downlink channel, and the like may be replaced with a side channel.

Similarly, the terminal in the present disclosure may be replaced with the base station. In this case, base station 10 is configured to have the functions that terminal 20 described above has.

### <Meaning and Interpretation of Terms>

As used herein, the term "determining" may encompass a wide variety of actions. For example, "determining" may be regarded as judging, calculating, computing, processing, deriving, investigating, looking up (search or inquiry) (e.g., looking up in table, database or another data structure), ascertaining and the like. Furthermore, "determining" may be regarded as receiving (for example, receiving information), transmitting (for example, transmitting information), inputting, outputting, accessing (for example, accessing data in memory) and the like. Further, "determining" may be regarded as resolving, selecting, choosing, establishing, comparing and the like. That is, "determining" may be regarded as a certain type of action related to determining. Further, "determining" may be replaced with "assuming," "expecting," "considering," and the like.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. For example, "connected" may be replaced with "accessed." When the terms are used in the present disclosure, two elements can be considered to be "connected" or "coupled" to each other using at least one of one or more electrical wires, cables, and printed electrical connections or using electromagnetic energy with a wavelength of a radio frequency domain, a microwave domain, an optical (both visible and invisible) domain, or the like that are non-limiting and non-inclusive examples.

### <Reference Signal>

The reference signal can also be abbreviated as an RS and may also be called as a pilot depending on the applied standard.

### <Meaning of "based on">

The description "based on" used in the present disclosure does not mean "based only on," unless otherwise specified. In other words, the description "based on" means both of "based only on" and "based at least on."

### <Terms "first" and "second">

Any reference to elements by using the terms "first," "second," and the like that are used in the present disclosure does not generally limit the quantities of or the order of these elements. The terms can be used as a convenient method of distinguishing between two or more elements in the present disclosure. Therefore, reference to first and second elements does not mean that only two elements can be employed, or that the first element has to precede the second element somehow.

### <"Means">

The "means" in the configuration of each apparatus described above may be replaced with "section," "circuit," "device," or the like.

### <Open-ended Format>

In a case where terms "include," "including," and their modifications are used in the present disclosure, these terms are intended to be inclusive like the term "comprising." Further, the term "or" used in the present disclosure is not intended to be an exclusive or.

### <Time Units such as a TTI, Frequency Units such as an RB, and a Radio Frame Configuration>

The radio frame may be constituted by one frame or a plurality of frames in the time domain. The one frame or each of the plurality of frames may be called a subframe in the time domain. The subframe may be further constituted by one slot or a plurality of slots in the time domain. The subframe may have a fixed time length (e.g., 1 ms) independent of numerology.

The numerology may be a communication parameter that is applied to at least one of transmission and reception of a certain signal or channel. The numerology, for example, indicates at least one of SubCarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in the frequency domain, specific windowing processing that is performed by the transmission and reception apparatus in the time domain, and the like.

The slot may be constituted by one symbol or a plurality of symbols (e.g., Orthogonal Frequency Division Multiplexing (OFDM)) symbol, Single Carrier-Frequency Division Multiple Access (SC-FDMA) symbol, or the like) in the time domain. The slot may also be a time unit based on the numerology.

The slot may include a plurality of mini-slots. Each of the mini-slots may be constituted by one or more symbols in the time domain. Furthermore, the mini-slot may be referred to as a subslot. The mini-slot may be constituted by a smaller number of symbols than that of the slot. PDSCH (or PUSCH) that is transmitted in the time unit that is greater than the mini-slot may be referred to as PDSCH (or PUSCH) mapping type A. PDSCH (or PUSCH) that is transmitted using the mini-slot may be referred to as PDSCH (or PUSCH) mapping type B.

The radio frame, the subframe, the slot, the mini slot, and the symbol indicate time units in transmitting signals. The radio frame, the subframe, the slot, the mini slot, and the symbol may be called by other corresponding names.

For example, one subframe, a plurality of continuous subframes, one slot, or one mini-slot may be called a Transmission Time Interval (TTI). That is, at least one of the subframe and the TTI may be a subframe (1 ms) in the existing LTE, a duration (for example, 1 to 13 symbols) that is shorter than 1 ms, or a duration that is longer than 1 ms. Note that, a unit that represents the TTI may be referred to as a slot, a mini-slot, or the like instead of a subframe.

Here, the TTI, for example, refers to a minimum time unit for scheduling in radio communication. For example, in an LTE system, the base station performs scheduling for allocating a radio resource (frequency bandwidth, transmit power, and the like that are used in each user terminal) on a TTI-by-TTI basis to each user terminal. Note that the definition of TTI is not limited to this.

The TTI may be a time unit for transmitting a channel-coded data packet (transport block), a code block, or a codeword, or may be a unit for processing such as scheduling and link adaptation. Note that, when the TTI is assigned, a time section (for example, the number of symbols) to which the transport block, the code block, the codeword, or the like is actually mapped may be shorter than the TTI.

Note that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

A TTI that has a time length of 1 ms may be referred to as a usual TTI (TTI in LTE Rel. 8 to LTE Rel. 12), a normal TTI, a long TTI, a usual subframe, a normal subframe, a long subframe, a slot, or the like. A TTI that is shorter than the usual TTI may be referred to as a shortened TTI, a short TTI, a partial TTI (or fractional TTI), a shortened subframe, a short subframe, a mini-slot, a subslot, a slot, or the like.

Note that the long TTI (for example, usual TTI, subframe, or the like) may be replaced with the TTI that has a time length which exceeds 1 ms, and the short TTI (for example, shortened TTI or the like) may be replaced with a TTI that has a TTI length which is less than a TTI length of the long TTI and is equal to or longer than 1 ms.

A resource block (RB) is a resource-allocation unit in the time domain and the frequency domain, and may include one or more contiguous subcarriers in the frequency domain. The number of subcarriers that is included in the RB may be identical regardless of the numerology, and may be 12, for example. The number of subcarriers that is included in the RB may be determined based on the numerology.

In addition, the RB may include one symbol or a plurality of symbols in the time domain, and may have a length of one slot, one mini slot, one subframe, or one TTI. One TTI, one subframe, and the like may be each constituted by one resource block or a plurality of resource blocks.

Note that one or more RBs may be referred to as a Physical Resource Block (PRB), a Sub-Carrier Group (SCG), a Resource Element Group (REG), a PRB pair, an RB pair, or the like.

In addition, the resource block may be constituted by one or more Resource Elements (REs). For example, one RE may be a radio resource region that is one subcarrier and one symbol.

A bandwidth part (BWP) (which may be referred to as partial bandwidth or the like) may represent a subset of contiguous common resource blocks (RB) for certain numerology in a certain carrier. Here, the common RBs may be identified by RB indices with reference to a common reference point of the carrier. The PRB may be defined by a certain BWP and may be numbered within the BWP.

The BWP may include a UL BWP and a DL BWP. An UE may be configured with one or more BWPs within one carrier.

At least one of the configured BWPs may be active, and the UE does not have to assume transmission/reception of a predetermined signal or channel outside the active BWP. Note that, "cell," "carrier," and the like in the present disclosure may be replaced with "BWP."

Structures of the radio frame, the subframe, the slot, the mini-slot, the symbol, and the like are described merely as examples. For example, the configuration such as the number of subframes that is included in the radio frame, the number of slots per subframe or radio frame, the number of mini-slots that is included within the slot, the numbers of symbols and RBs that are included in the slot or the mini-slot, the number of subcarriers that is included in the RB, the number of symbols within the TTI, the symbol length, the Cyclic Prefix (CP) length, and the like can be changed in various ways.

### <Maximum Transmit Power>

The "maximum transmit power" described in the present disclosure may mean a maximum value of the transmit power, the nominal UE maximum transmit power, or the rated UE maximum transmit power.

### <Articles>

In a case where articles, such as "a," "an," and "the" in English, for example, are added in the present disclosure by translation, nouns following these articles may have the same meaning as used in the plural.

### <"Diferrent">

In the present disclosure, the expression "A and B are different" may mean that "A and B are different from each other." Note that, the expression may also mean that "A and B are different from C." The expressions "separated" and "coupled" may also be interpreted in the same manner as the expression "A and B are different."

### Industrial Applicability

An aspect of the present disclosure is useful for communication systems.

### Reference Signs List

10 Base station
20 Terminal
101, 202 Transmission section
102, 201 Reception section
103, 203 Control section

## Claims

1. A terminal, comprising:
a transmission section that transmits, by using a cell different from a cell in which a signal based on semi-persistent scheduling has been received, a response signal for the signal; and
a control section that interprets, based on a subcarrier spacing of the cell in which the response signal is transmitted, a parameter for determining a transmission slot for the response signal and determines a slot for transmitting the response signal.

2. The terminal according to claim 1, wherein the control section determines the cell in which the response signal is transmitted, based on a downlink control signal.

3. The terminal according to claim 1, wherein the transmission section transmits the response signal in a predetermined cell.

4. The terminal according to claim 1, wherein the control section determines the cell in which the response signal is transmitted, based on higher layer signaling.

5. A radio communication method, comprising:
transmitting, by using a cell different from a cell in which a signal based on semi-persistent scheduling has been received, a response signal for the signal; and
interpreting, based on a subcarrier spacing of the cell in which the response signal is transmitted, a parameter for determining a transmission slot for the response signal, and determining a slot for transmitting the response signal.
